# EUROPEAN PATENT APPLICATION

(11) **EP 2 180 424 A1**
(43) Date of publication of application: **28.04.2010**
(21) Application number: 07790654.3
(22) Date of filing: 11.07.2007
(51) Int. Cl.: G06F 21/20

(54) **USER AUTHENTICATION DEVICE, USER AUTHENTICATION METHOD, AND USER AUTHENTICATION PROGRAM**

(71) Applicant: Fujitsu Limited, Kawasaki-shi, Kanagawa 211-8588 (JP)
(72) Inventor: SHINZAKI, Takashi, Kawasaki-shi Kanagawa 211-8588 (JP); HAYASHIDA, Naoko, Kawasaki-shi Kanagawa 211-8588 (JP)
(74) Representative: Stebbing, Timothy Charles
(86) International application number: PCT/JP2007/063850
(87) International publication number: WO 2009/008074

(57) **Abstract**

A user authenticating apparatus in accordance with the present invention stores user information where identification information to identify each of a plurality of users and biometric information of each user are associated with each other, acquires identification information of the user, when the user starts to use a predetermined target, authenticates each user using the acquired identification information and the stored user information, as first authentication, stores the identification information of the user whose first authentication is succeeded as success information, acquires the biometric information of the user, and authenticates each user using the acquired biometric information and the biometric information corresponding to the identification information of the users stored as the success information among the stored biometric information, as second authentication.

## Description

### TECHNICAL FIELD

The present invention relates to a user authenticating apparatus, a user authenticating method, and a user authenticating program.

### BACKGROUND ART

In general, safety in a specific area has been secured by repeating an authenticating process for the same person every time a mode changes.

Authentication processing methods include biometric authenticating methods of authenticating each individual using unique information and biometric information (for example, fingerprints, vein patterns of palms of hands, or irises of eyeballs) where forgery is difficult, which are widely used for securing high safety.

Such biometric authenticating methods are largely classified into two kinds of "1:1 authentication (one to one authentication)" and "1:N authentication (one to many authentication)". The "1:1 authentication" receives biometric information and identification information, such as an ID, from a person who requires authentication, specifies biometric information corresponding to the identification information, collates the specified biometric information and the received biometric information, and authenticates whether the person is an authorized user. The "1:N authentication" receives only biometric information from a person who requires authentication, collates all biometric information registered in advance (or all biometric information to be collated) and the received biometric information, and authenticates whether the person is an authorized user.

Patent Document 1 discloses a technology for securing safety in an information terminal apparatus disposed in a facility by adding a user who is authenticated and visits the facility to a visitor list, confirming that a log-on request is included in the visitor list, when the log-on requester logs on the information terminal apparatus disposed in the facility, and permitting logon.

Patent Documents 2 and 3 disclose a technology for securing safety in a facility by applying a biometric authenticating method, when a user enters the facility or logs on an information terminal apparatus.

Patent Document 4 discloses a technology for collating biometric information input from a user for authentication and biometric information of users registered in advance and selecting biometric information becoming a collation target of "1:N authentication" in a biometric authenticating method.

Patent Document 5 discloses a technology for giving the priority order to biometric information becoming a collation target on the basis of a behavior pattern of a user and selecting biometric information becoming a collation target of "1:N authentication."

Patent Documents 6 and 8 disclose a technology for setting a valid period to biometric information of users registered in advance and selecting biometric information becoming a collation target of "1:N authentication."

Patent Document 7 discloses a technology for referring to a blacklist where biometric information of cautions is recorded to exclude the biometric information recorded in the blacklist from the biometric information of the users registered in advance, thereby selecting biometric information becoming a collation target of "1:N authentication."

Patent Document 1: Japanese Laid-open Patent Publication No. 2006-155138
Patent Document 2: Japanese Laid-open Patent Publication No. 2004-246553
Patent Document 3: Japanese Laid-open Patent Publication No. 2004-355318
Patent Document 4: Japanese Laid-open Patent Publication No. 2004-258963
Patent Document 5: Japanese Laid-open Patent Publication No. 2002-140707
Patent Document 6: Japanese Laid-open Patent Publication No. 2006-277028
Patent Document 7: Japanese Laid-open Patent Publication No. 2006-260482
Patent Document 8: Japanese Laid-open Patent Publication No. 2003-193723

### DISCLOSURE OF INVENTION

### PROBLEMS TO BE SOLVED BY THE INVENTION

Meanwhile, according to the technology in the related art for securing the safety by referring to the visitor list, second authentication is performed by only referring to the visitor list, and the safety in the information terminal apparatus is not necessarily secured. Therefore, authentication performance is deteriorated.

According to the technology in the related art for applying the biometric authenticating method to secure the safety, the number of collation targets increases, and an effective management for an increase in time needed to execute a collating process is difficult. Therefore, authentication performance is deteriorated.

According to the technology in the related art for selecting the biometric information becoming the collation target of the "1:N authentication", since the collation target is selected on the basis of fixed information, the collation target cannot be flexibly selected according to a situation, and selection precision may be lowered. Therefore, authentication performance is deteriorated.

Accordingly, the present invention is made to solve the above-mentioned problems in the related art, and it is an object of the invention to provide a user authenticating apparatus, a user authenticating method, and a user authenticating program that can improve authentication performance.

### MEANS FOR SOLVING THE PROBLEMS

To solve the problems and achieves the object, the present invention is a user authenticating apparatus for authenticating a user. The user authenticating apparatus includes a user information storage unit that stores user information where identification information for uniquely identifying each of a plurality of users and biometric information of the each of the users are associated with each other; an identification information acquiring unit that acquires identification information of the user, when the user starts to use a predetermined target; a first authenticating unit that authenticates the user using the identification information acquired by the identification information acquiring unit and the user information stored in the user information storage unit; a success information storage unit that stores, as success information, identification information of the user who is successfully authenticated by the first authenticating unit; a biometric information acquiring unit that acquires the biometric information of the user; and a second authenticating unit that authenticates the user using the biometric information acquired by the biometric information acquiring unit and the biometric information corresponding to the identification information of the users stored as the success information in the success information storage unit among the biometric information stored in the user information storage unit.

The invention further includes a success information deleting unit that determines whether a predetermined registration time has passed after predetermined success information is stored in the success information storage unit, and deletes the predetermined success information from the success information storage unit, when the registration time has passed.

In the invention, the success information deleting unit determines whether a registration time set for each user has passed.

In the invention, when the number of success information stored in the success information storage unit becomes a predetermined value or more, the success information deleting unit uses a registration time shorter than a registration time used for a determination when the number of success information is smaller than the predetermined value to determine whether the registration time has passed.

The invention further includes a use frequency storage unit that stores a use frequency of each user. When the number of success information stored in the success information storage unit becomes a predetermined value or more, the success information deleting unit further deletes success information of the user whose use frequency is smaller than a predetermined value from the success information storage unit, based on the use frequency of each user stored in the use frequency storage unit.

In the invention, the user information storage unit associates group identification information for uniquely identifying a group that each user belongs with the identification information of each user and stores the user information, and the success information storage unit stores the identification information of the user successfully authenticated by the first authenticating unit and identification information of the other users corresponding to the group identification information of the user as the success information.

In the invention, the user information storage unit associates a product or information used by the user with the identification information of the user and stores the user information, and the identification information acquiring unit acquires the identification information of the user from the product or information used by the user.

In the invention, when the user completes to use the predetermined target, the identification information acquiring unit further acquires the identification information of the user, and the success information deleting unit further deletes the identification information, which is acquired when the use is completed by the identification information acquiring unit, from the success information storage unit.

In the invention, the identification information acquiring unit acquires identification information of the user who returns a predetermined product or information, and the biometric information acquiring unit acquires biometric information of the user who desires to lend a predetermined product or information.

The invention further includes a biometric information storage unit that acquires biometric information corresponding to the identification information of the user stored as the success information in the success information storage unit from the user information storage unit, and stores the biometric information. The second authenticating unit authenticates the user using the biometric information stored in the biometric information storage unit.

The invention further includes a lending frequency storage unit that storages a lending frequency by which the user who has returned a predetermined product or information lends the predetermined product or information at the same date. When the number of success information stored in the success information storage unit becomes a predetermined value or more, the success information deleting unit further deletes success information of the user whose lending frequency is smaller than a predetermined value from the success information storage unit, based on a lending frequency of each user stored in the lending frequency storage unit.

In the invention, the identification information acquiring unit acquires the identification information of the user who enters a predetermined area, and acquires the identification information of the user who exits from the predetermined area, and the success information storage unit stores the identification information of the user who enters the predetermined area as the success information, until the user exits from the predetermined area.

The invention further includes a success information adding and deleting unit that adds the identification information acquired as the entry by the identification information acquiring unit to the success information storage unit and stores the information, and deletes the identification information acquired as the exit by the identification information acquiring unit from the success information storage unit.

In the invention, the success information adding and deleting unit obtains a plurality of pieces of identification information acquired by the identification information acquiring unit, and adds each piece of identification information to or deletes each piece of identification information from the success information storage unit, according to whether each identification information is the entry or the exit.

In the invention, the success information adding and deleting unit obtains a plurality of pieces of identification information acquired by the identification information acquiring unit for every predetermined time, and adds each piece of identification information to or deletes each piece of identification information from the success information storage unit, according to whether each piece of identification information is the entry or the exit.

In the invention, the success information storage unit always stores the identification information of the predetermined user as success information, without depending on whether the predetermined user enters the predetermined area or exits from the predetermined area.

In the invention, the success information storage unit always stores the identification information of the predetermined user as non-success information, without depending on whether the predetermined user enters the predetermined area or exits from the predetermined area, and the second authenticating unit authenticates the user without using biometric information corresponding to the identification information of the user stored as the non-success information in the success information storage unit.

In the invention, the second authenticating unit authenticates the user using the identification information of the user who enters an acquisition area of biometric information and whose information is stored as the success information in the success information storage unit, according to whether the biometric information is acquired by the biometric information acquiring unit.

The present invention is a user authenticating method for authenticating a user. The user authenticating method includes a user information storing step of storing user information where identification information for uniquely identifying each of a plurality of users and biometric information of the each of the users are associated with each other; an identification information acquiring step of acquiring identification information of the user, when the user starts to use a predetermined target; a first authenticating step of authenticating the user using the identification information acquired at the identification information acquiring step and the user information stored at the user information storing step; a success information storing step of storing, as success information, identification information of the user who is successfully authenticated at the first authenticating step; a biometric information acquiring step of acquiring the biometric information of the user; and a second authenticating step of authenticating the user using the biometric information acquired at the biometric information acquiring step and the biometric information corresponding to the identification information of the users stored as the success information at the success information storing step among the biometric information stored at the user information storing step.

The present invention is a user authenticating program that causes a computer to perform a user authenticating method for authenticating a user. The user authenticating program causes the computer to perform: a user information storing step of storing user information where identification information for uniquely identifying each of a plurality of users and biometric information of the each of the users are associated with each other; an identification information acquiring step of acquiring identification information of the user, when the user starts to use a predetermined target; a first authenticating step of authenticating the user using the identification information acquired at the identification information acquiring step and the user information stored at the user information storing step; a success information storing step of storing, as success information, identification information of the user who is successfully authenticated at the first authenticating step; a biometric information acquiring step of acquiring the biometric information of the user; and a second authenticating step of authenticating the user using the biometric information acquired at the biometric information acquiring step and the biometric information corresponding to the identification information of the users stored as the success information at the success information storing step among the biometric information stored at the user information storing step.

### EFFECT OF THE INVENTION

In accordance with the present invention, only the users who are authenticated to start to use information can be narrowed down as the collation targets of the "1:N authentication". Therefore, authentication performance can be improved.

In accordance with the present invention, for example, the users who rarely request to lend the books among the users who are authenticated to start to use the library can be excluded from the collation targets of the "1:N authentication". Therefore, authentication performance can be improved.

In accordance with the present invention, the registration time can be set to each user on the basis of the behavior patterns of the individual users in the library, and the collation targets of the "1:N authentication" can be flexibly narrowed down on the basis of the characteristics of the individual users. Therefore, authentication performance can be improved.

In accordance with the present invention, even when the number of success information increases, the collation targets of the "1:N authentication" can be narrowed down by reducing the registration time, and the time that is needed to execute the collating process can be reduced. Therefore, authentication performance can be improved.

In accordance with the present invention, even when the number of success information increases, the collation targets of the "1:N authentication" can be narrowed down by deleting the success information of the users who rarely request the authentication, and the time that is needed to execute the collating process can be reduced. Therefore, authentication performance can be improved.

In accordance with the present invention, the users who are likely to request the authentication like the users who are authenticated to start to use information can be added to the collation targets of the "1:N authentication". Therefore, authentication performance can be improved.

In accordance with the present invention, the first authenticating process can be quickly executed using the product or information capable of specifying the user, instead of the user. Therefore, authentication performance can be improved.

In accordance with the present invention, the users who rarely request the authentication can be excluded from the collation targets of the "1:N authentication". Therefore, authentication performance can be improved.

In accordance with the present invention, for example, the users who return the books and are authenticated to start to use the library can be narrowed down as the authentication targets of the "1:N authentication" at the time of lending the books. Therefore, authentication performance can be improved.

In accordance with the present invention, the processing speed at the time of the "1:N authentication" in the second authentication can be increased by previously acquiring the biometric information of the users whose first authentication are succeeded and storing the biometric information. Therefore, authentication performance can be improved.

In accordance with the present invention, even when the number of success information increases, the collation targets of the "1:N authentication" can be narrowed down by deleting the success information of the uses who rarely request the authentication to request to lend the books in the library, and the time that is needed to execute the collating process can be reduced. Therefore, authentication performance can be improved.

In accordance with the present invention, only the users who are likely to request the authentication can be narrowed down as the collation targets of the "1:N authentication". Therefore, authentication performance can be improved.

In accordance with the present invention, the users who rarely request the authentication can be quickly excluded from the collation targets of the "1:N authentication". Therefore, authentication performance can be improved.

In accordance with the present invention, the collation targets of the "1:N authentication" can be narrowed down by collectively performing the addition and deletion of the success information. Therefore, authentication performance can be improved.

In accordance with the present invention, the updating process of the success information can be executed at a constant interval without executing the process whenever the success information is updated, and the load of the apparatus that is needed to execute the updating process can be alleviated. Therefore, authentication performance can be improved.

In accordance with the present invention, for example, the user authenticating apparatus can flexibly correspond to needs of the users by always setting the users having posts of the directors as the collation targets of the "1:N authentication". Therefore, authentication performance can be improved.

In accordance with the present invention, for example, the user authenticating apparatus can flexibly correspond to needs of the users by always excluding the users causing a problem in the predetermined area from the collation targets of the "1:N authentication". Therefore, authentication performance can be improved.

In accordance with the present invention, the users who are permitted to enter a place where the biometric information reading apparatus is disposed can be narrowed down as a population in the collation targets of the "1:N authentication". Therefore, authentication performance can be improved.

### BRIEF DESCRIPTION OF DRAWINGS

FIG. 1 is a diagram illustrating the outline and characteristic of a user authenticating apparatus according to a first embodiment.
FIG. 2 is a block diagram illustrating the configuration of the user authenticating apparatus in the first embodiment.
FIG. 3 is a diagram illustrating a user information storage unit in the first embodiment.
FIG. 4 is a diagram illustrating a success information storage unit in the first embodiment.
FIG. 5 is a diagram illustrating a biometric information storage unit in the first embodiment.
FIG. 6 is a diagram illustrating a first authenticating process of the user authenticating apparatus in the first embodiment.
FIG. 7 is a diagram illustrating a deleting process of success information and biometric information of the user authenticating apparatus in the first embodiment.
FIG. 8 is a diagram illustrating a second authenticating process of the user authenticating apparatus in the first embodiment.
FIG. 9 is a diagram illustrating a user authenticating apparatus according to a second embodiment.
FIG. 10 is a diagram illustrating a user authenticating apparatus according to a third embodiment.
FIG. 11 is a diagram illustrating a user authenticating apparatus according to a fourth embodiment.
FIG. 12 is a diagram illustrating a user authenticating apparatus according to a fifth embodiment.
FIG. 13 is a diagram illustrating the outline and characteristic of a user authenticating system according to a sixth embodiment.
FIG. 14 is a diagram illustrating the outline and characteristic of the user authenticating system in the sixth embodiment.
FIG. 15 is a diagram illustrating the outline and characteristic of the user authenticating system in the sixth embodiment.
FIG. 16 is a block diagram illustrating the configuration of an area entry/exit managing apparatus in the sixth embodiment.
FIG. 17 is a diagram illustrating an area entry/exit authority storage unit in the sixth embodiment.
FIG. 18 is a block diagram illustrating the configuration of a user authenticating apparatus in the sixth embodiment.
FIG. 19 is a diagram illustrating a biometric information storage unit in the sixth embodiment.
FIG. 20 is a diagram illustrating a user authentication target storage unit in the sixth embodiment.
FIG. 21 is a diagram illustrating a terminal sensor storage unit in the sixth embodiment.
FIG. 22 is a diagram illustrating a terminal apparatus use authority storage unit in the sixth embodiment.
FIG. 23 is a diagram illustrating a process at the time of an entry in an area entry/exit managing apparatus in the sixth embodiment.
FIG. 24 is a diagram illustrating a process at the time of an entry in the user authenticating apparatus in the sixth embodiment.
FIG. 25 is a diagram illustrating an authenticating process of the user authenticating apparatus in the sixth embodiment.
FIG. 26 is a diagram illustrating a user authenticating system according to a seventh embodiment.
FIG. 27 is a diagram illustrating a user authenticating system according to an eighth embodiment.
FIG. 28 is a diagram illustrating a user authenticating system according to a ninth embodiment.
FIG. 29 is a diagram illustrating a computer that executes a user authenticating program according to the first embodiment.

### EXPLANATIONS OF LETTERS OR NUMERALS

- 1: Identification number reading apparatus
- 2: Biometric information reading apparatus
- 3: User information storage unit
- 10: User authenticating apparatus
- 11: Communication control I/F unit
- 12: Storage unit
- 12a: Success information storage unit
- 12b: Biometric information storage unit
- 13: Processor
- 13a: First authenticating unit
- 13b: Biometric information storage unit
- 13c: Second authenticating unit
- 13d: Success information deleting unit

### BEST MODE FOR CARRYING OUT THE INVENTION

Hereinafter, embodiments of a user authenticating apparatus, a user authenticating method, and a user authenticating program according to the present invention will be described in detail with reference to the accompanying drawings.

### First Embodiment

### Outline and characteristic of a user authenticating apparatus in the first embodiment

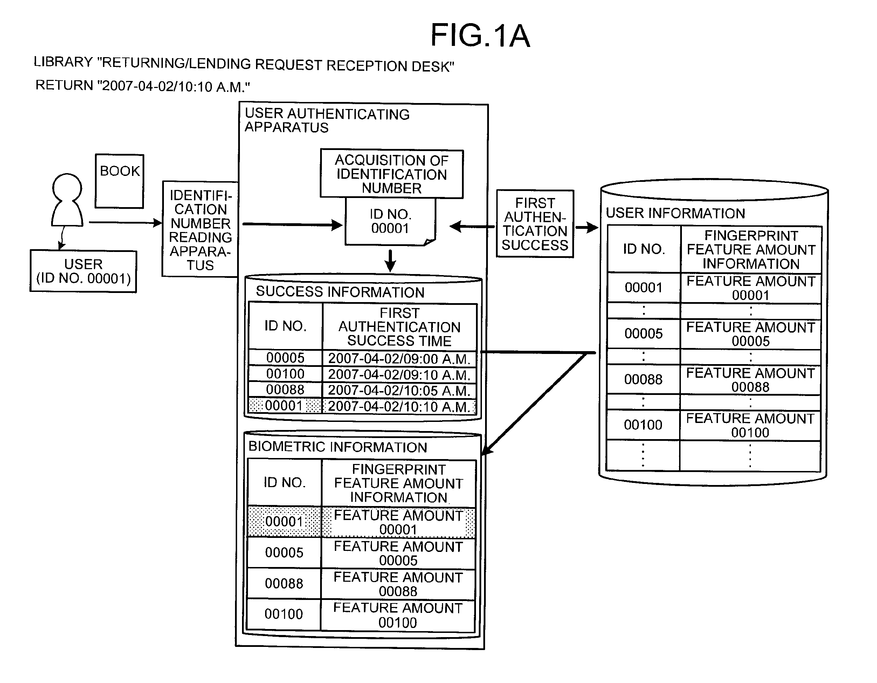

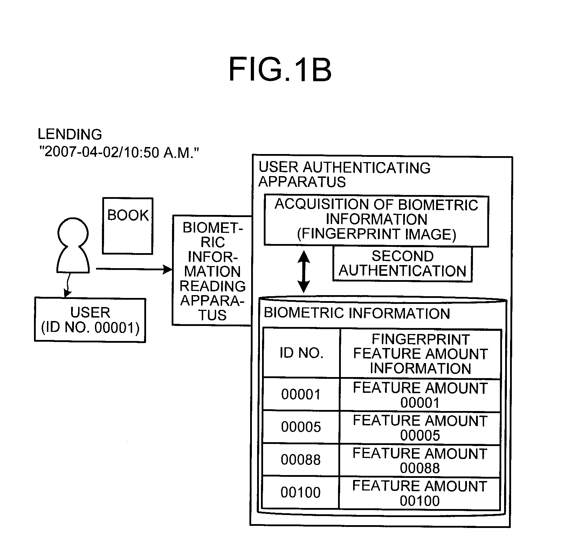

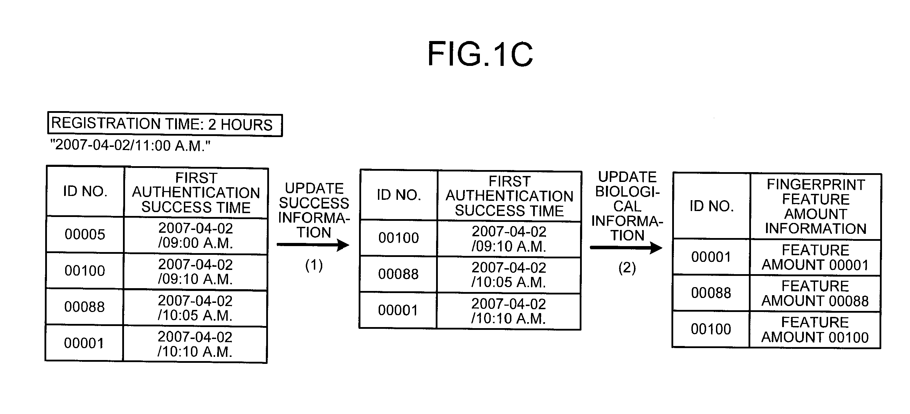

First, a main characteristic of the user authenticating apparatus in the first embodiment will be specifically described using FIG. 1. FIG. 1 is a diagram illustrating the outline and characteristic of the user authenticating apparatus in the first embodiment.

The user authenticating apparatus in the first embodiment authenticates a user. For example, the user authenticating apparatus in the first embodiment is disposed on a "returning/lending request reception desk" in a library, acquires biometric information, such as a "fingerprint image", from a user who requires to lend books, performs "1:N authentication", and permits the user who has input the acquired biometric information to lend the books, only when the acquired biometric information is matched with biometric information registered as users in advance. In this case, the "1:N authentication" receives only biometric information from a person who requires authentication, collates all of a plurality of pieces of biometric information (or all biometric information to be collated) registered in advance and the acquired biometric information, and authenticates whether the person is an authorized user.

A main characteristic in accordance with the present invention is to improve authentication performance. The main characteristic will be simply described. The user authenticating apparatus in the first embodiment stores user information where identification information to identify each of a plurality of users and biometric information of each user are associated with each other.

Specifically, as illustrated in FIG. 1A, the user authenticating apparatus in the first embodiment stores user information where identification information to identify each of the plural users registered in a library and "fingerprint feature amount information" extracted from a "fingerprint image" corresponding to biometric information of each user are associated with each other. For example, as illustrated in FIG. 1A, the user authenticating apparatus associates an "identification number: 00001" and "fingerprint feature amount information: feature amount 00001" as user information with each other and stores an association result.

The user authenticating apparatus in the first embodiment acquires identification information of a user who returns a predetermined product, when the user starts to use a library. Specifically, the user who visits the library to return lent books provides an IC card, which stores an identification number allocated to the user, to an identification information reading apparatus, and the user authenticating apparatus in the first embodiment acquires the identification number that is read from the IC card by the identification information reading apparatus.

More specifically, as illustrated in FIG. 1A, the user authenticating apparatus in the first embodiment uses the identification number reading apparatus to acquire an "identification number: 00001" from the IC card provided by the user having an "identification number: 00001" who visits the library to return the lent books, at "2007-04-02/10:10 a.m. The user authenticating apparatus further acquires "2007-04-02/10:10 a.m." that corresponds to the time when the identification number is acquired.

The user authenticating apparatus in the first embodiment uses the acquired identification information and the stored user information to authenticate the user, as first authentication. In other words, the user authenticating apparatus searches whether the acquired identification number exists in the identification numbers registered as the user information. The user authenticating apparatus determines the authentication result as the "first authentication success" when the identification number corresponding to the user information exists, and determines the authentication result as the "first authentication non-success" when the identification number corresponding to the user information does not exist. In other words, the user authenticating apparatus permits the user whose authentication result is determined as the "first authentication success" to start to use the library, and does not permit the user whose authentication result is determined as the "first authentication non-success" to start to use the library.

The user authenticating apparatus in the first embodiment stores the identification information of the user whose first authentication is succeeded as success information. Specifically, the user authenticating apparatus stores the identification information of the user whose first authentication is succeeded and an acquisition time of the identification number of the user as a "first authentication success time". For example, as illustrated in FIG. 1A, the user authenticating apparatus stores the "identification number: 00001" determined as the "first authentication success" as the success information together with the "first authentication success time: 2007-04-02/10:10 a.m.".

The user authenticating apparatus in the first embodiment acquires biometric information, which corresponds to the identification information of the user stored as the success information, from the user information and stores the biometric information. For example, as illustrated in FIG. 1A, the user authenticating apparatus acquires the "feature amount 00001", which corresponds to the "identification information: 00001" newly stored as the success information, from the user information and stores the feature amount.

As illustrated in FIG. 1A, before acquiring the "feature amount 00001" corresponding to the "identification number: 00001" and storing the feature amount, the user authenticating apparatus in the first embodiment previously acquires the "feature amount 00005" corresponding to an "identification number: 00005", the "feature amount 000100" corresponding to an "identification number: 00100", and a "feature amount: 00088" corresponding to an "identification number: 00088" and stores the feature amounts.

The user authenticating apparatus in the first embodiment acquires the biometric information of the user who desires to lend a predetermined product. Specifically, as illustrated in FIG. 1B, the user authenticating apparatus in the first embodiment acquires a "fingerprint image" corresponding to the biometric information of the user (identification number: 00001" who desires to lend the book, through the biometric information reading apparatus.

The user authenticating apparatus in the first embodiment uses the acquired biometric information and the biometric information, which is previously acquired from the user information and stored, to authenticate the user, as second authentication. Specifically, the user authenticating apparatus in the first embodiment extracts "fingerprint feature amount information" from the acquired "fingerprint image", and authenticates the user when "fingerprint feature amount information" matched with the extracted "fingerprint feature amount information" exists in the "fingerprint feature amount information" stored as the biometric information. In other words, the user authenticating apparatus determines that the user is permitted to lend the book. When the "fingerprint feature amount information" matched with the extracted "fingerprint feature amount information" does not exist in the "fingerprint feature amount information" stored as the biometric information, the user authenticating apparatus determines that the user is not permitted to lend the book.

For example, as illustrated in FIG. 1B, since the "fingerprint feature amount information: feature amount 00001" matched with the "fingerprint feature amount information" extracted from the "fingerprint image" of the user (identification number: 00001) exists in the "fingerprint feature amount information" stored as the biometric information, the user authenticating apparatus determines that the user (identification number: 00001) is permitted to lend the book.

Meanwhile, the user authenticating apparatus in the first embodiment determines whether a predetermined registration time has passed after predetermined success information is stored, and deletes the corresponding predetermined success information when the registration information has passed. In other words, the user authenticating apparatus in the first embodiment stores setting of a "registration time: 2 hours", determines whether "2 hours" have passed from the "first authentication success time" stored together with the identification number, for every success information, and deletes the success information when there is the success information where "2 hours" have passed from the "first authentication success time".

More specifically, as illustrated in FIG. 1C, at a point of time of "2007-04-02/11:00 a.m.", the success information of "identification number: 00005 and first authentication success time: 2007-04-02/09:00 a.m." where "2 hours" have passed from the "first authentication success time" is deleted, and the success information is updated (refer to (1) of FIG. 1C). As a result, the biometric information of "identification number: 00005 and feature amount 00005" is also deleted, and the biometric information is updated (refer to (2) of FIG. 1C).

In this way, the user authenticating apparatus in the first embodiment can narrow down the users who return the books and are authenticated to start to use the library as the collation targets of the "1:N authentication" at the time of lending the books, and can improve authentication performance as the main characteristic.

### [Configuration of the user authenticating apparatus in the first embodiment]

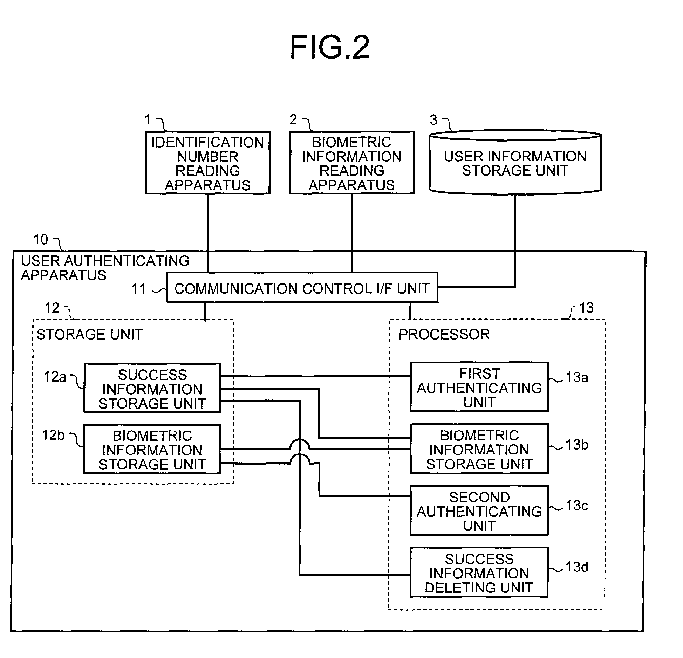

Next, the user authenticating apparatus in the first embodiment will be described using FIG. 2. FIG. 2 is a block diagram illustrating the configuration of the user authenticating apparatus in the first embodiment.

As illustrated in FIG. 2, a user authenticating apparatus 10 in the first embodiment includes a communication control I/F unit 11, a storage unit 12, and a processor 13. The user authenticating apparatus 10 is connected to an identification number reading apparatus 1, a biometric information reading apparatus 2, and a user information storage unit 3.

The user information storage unit 3 stores user information where identification information to identify each of the plural users registered in the library and "fingerprint feature amount information" extracted from a "fingerprint image" corresponding to biometric information of each user are associated with each other. The user information storage unit 3 is disposed in a management center of the library and connected to the user authenticating apparatus 10 through a network. The user information storage unit 3 corresponds to a "user information storage unit" recited in the claims.

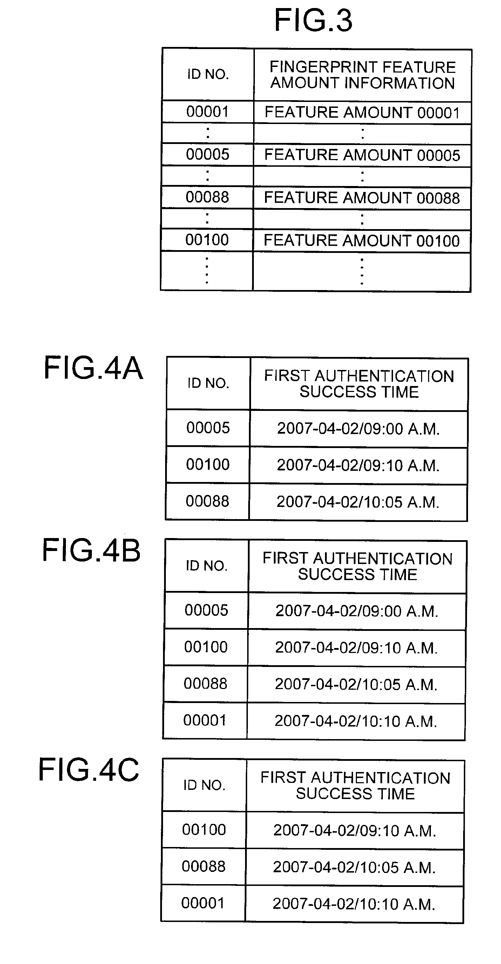

For example, as illustrated in FIG. 3, the user information storage unit 3 associates an "identification number: 00001" and "fingerprint feature amount information: feature amount 00001" as user information with each other and stores the association result. The "fingerprint feature amount information" is information that is obtained by extracting a feature portion, such as a cut portion or a branched portion of a curved line constituting the fingerprints, from the "fingerprint image" as the feature amount. FIG. 3 is a diagram illustrating the user information storage unit in the first embodiment.

The identification number reading apparatus 1 acquires the identification information of the user who returns a predetermined product, when the user starts to use the library, and transmits the acquired identification number to the user authenticating apparatus 10. The identification number reading apparatus 1 corresponds to an "identification information acquiring unit" recited in the claims.

Specifically, the identification number reading apparatus 1 reads the identification number from the IC card provided by the user who visits the library to return the lent book, and transmits the identification number to the user authenticating apparatus 10.

More specifically, as illustrated in FIG. 1A, the identification number reading apparatus 1 reads the "identification number: 00001" from the IC card provided by the user having the "identification number: 00001" who visits the library to return the lent book, at a point of time "2007-04-02/10:10 a.m.", and transmits the "identification number": 00001" and "2007-04-02/10:10 a.m." corresponding to an acquisition time of the identification number to the user authenticating apparatus 10.

The biometric information reading apparatus 2 acquires the biometric information of the user who desires to lend the predetermined product, and transmits the acquired biometric information to the user authenticating apparatus 10. The biometric information reading apparatus 2 corresponds to a "biometric information acquiring unit" recited in the claims.

For example, as illustrated in FIG. 1B, the biometric information reading apparatus 2 acquires the "fingerprint image" as the biometric information of the user (identification number: 00001) who desires to lend the book, and transmits the acquired biometric information to the user authenticating apparatus 10.

The communication control I/F unit 11 controls communication that is related to a variety of information exchanged between the identification number reading apparatus 1, the biometric information reading apparatus 2, the user information storage unit 3, the storage unit 12, and the processor 13. For example, the communication control I/F unit 11 transmits the identification information, which is transmitted by the identification number reading apparatus 1, or the biometric information, which is transmitted by the biometric information reading apparatus, to the processor 13, or transmits biometric information, which is acquired from the user information storage unit 3 by a biometric information storage unit 13b to be described in detail below, to the storage unit 12.

The storage unit 12 stores various process results by the processor 13 to be described in detail below. In particular, as the characteristic that is closely connected with the present invention, as illustrated in FIG. 2, the storage unit 12 includes a success information storage unit 12a and a biometric information storage unit 12b. The success information storage unit 12a stores the identification information that is determined as the success information among the identification numbers received from the identification number reading apparatus 1, by a first authenticating unit 13a to be described in detail below, and the biometric information storage unit 12b stores the biometric information that is acquired from the user information storage unit 3, by the biometric information storage unit 13b to be described in detail below. The success information storage unit 12a corresponds to a "success information storage unit" recited in the claims, and the biometric information storage unit 12b corresponds to a "biometric information storage unit" recited in the claims. The individual units will be described in detail below.

The processor 13 executes various processes. In particular, as the characteristic that is closely associated with the present invention, as illustrated in FIG. 2, the processor 13 includes the first authenticating unit 13a, the biometric information storage unit 13b, a second authenticating unit 13c, and a success information deleting unit 13d. The first authenticating unit 13a corresponds to a "first authenticating unit" recited in the claims, the second authenticating unit 13c corresponds to a "second authenticating unit" recited in the claims, and the success information deleting unit 13d corresponds to a "success information deleting unit" recited in the claims.

The first authenticating unit 13a authenticates the user using the identification information received from the identification number reading apparatus 1 and the user information stored by the user information storage unit 3. In other words, the first authenticating unit 13a searches whether the identification number received from the identification number reading apparatus 1 exists in the identification numbers registered as the user information in the user information storage unit 3. The first authenticating unit 13a determines the authentication result as the "first authentication success" when the corresponding identification number exists in the user information, and determines the authentication result as the "first authentication non-success" when the corresponding identification number does not exist in the use information. The first authenticating unit 13a permits the user whose authentication result is determined as the "first authentication success" to start to use the library, and does not permit the user whose authentication result is determined as the "first authentication non-success" to start to use the library.

For example, as illustrated in FIG. 3, since the received "identification number: 00001" exists in the identification numbers registered as the user information in the user information storage unit 3, the first authenticating unit 13a determines the authentication result as the "first authentication success", and permits the user having the "identification number: 00001" to start to use the library.

The first authenticating unit 13a stores the "identification number" of the user whose authentication result is determined as the "first authentication success" and a "first authentication success time" corresponding to a time when the corresponding "identification number" is received from the identification number reading apparatus 1 as the success information in the success information storage unit 12a.

Specifically, as illustrated in FIG. 4, the first authenticating unit 13a stores the "identification number" and the "first authentication success time" as the success information in the success information storage unit 12a, whenever the authentication result is determined as the "first authentication success". In other words, the first authenticating unit 13a stores the "identification number: 00005 and first authentication success time: 2007-04-02/09:00 a.m.", the "identification number: 00100 and first authentication success time: 2007-04-02/09:10 a.m.", and the "identification number: 00088 and first authentication success time: 2007-04-02/10:05 a.m." as success information in the success information storage unit 12a (refer to FIG. 4A).

The first authenticating unit 13a adds the "identification number: 00001" and the "first authentication success time: 2007-04-02/10:10 a.m." whose authentication results are newly determined as the "first authentication success" to the success information storage unit 12a as the success information and stores the information (refer to FIG. 4B). FIG. 4 is a diagram illustrating the success information storage unit in the first embodiment.

The biometric information storage unit 13b acquires the biometric information corresponding to the identification information of the user, which is stored as the success information by the success information storage unit 12a, from the user information stored by the user information storage unit 3, and stores the biometric information in the biometric information storage unit 12b.

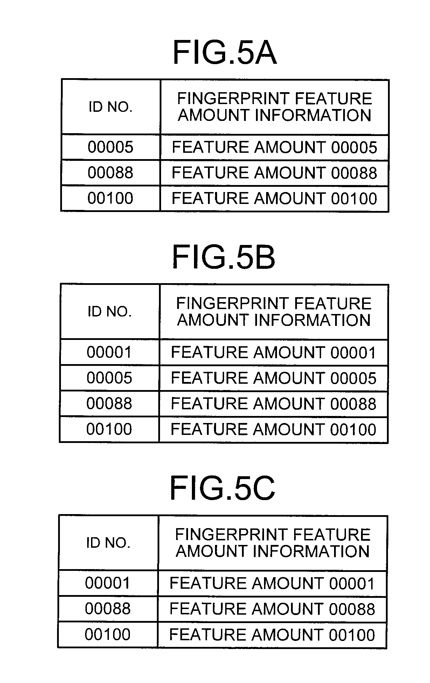

Specifically, as illustrated in FIG. 5, the biometric information storage unit 13b acquires the "fingerprint feature amount information", which is the biometric information corresponding to the identification number in the success information, from the user information stored by the user information storage unit 3, and stores the fingerprint feature amount information in the biometric information storage unit 12b.

In other words, the biometric information storage unit 13b acquires the "feature amount 00005" corresponding to the "identification number: 00005", the "feature amount 00100" corresponding to the "identification number: 00100", and the "feature amount 00088" corresponding to the "identification number: 00088", from the user information storage unit 3, and stores the feature amounts in the biometric information storage unit 12b (refer to FIG. 5A). FIG. 5 is a diagram illustrating the biometric information storage unit in the first embodiment.

When the success information stored by the success information storage unit 12a is added, the biometric information storage unit 13b acquires the biometric information corresponding to the identification number in the added success information from the user information stored by the user information storage unit 3, adds the biometric information to the biometric information storage unit 12b, and stores the biometric information.

In other words, as illustrated in FIG. 4B, if the "identification number: 00001" is newly added as the success information, the biometric information storage unit 13b acquires the "fingerprint feature amount information: feature amount 00001" corresponding to the "identification number: 00001" from the user information storage unit 3. As illustrated in FIG. 5B, the biometric information storage unit 13b adds the fingerprint feature amount information to the biometric information storage unit 12b and stores the fingerprint feature amount information.

The second authenticating unit 13c authenticates the user using the biometric information received from the biometric information reading apparatus 2 and the biometric information stored by the biometric information storage unit 12b. Specifically, the second authenticating unit 13c extracts the "fingerprint feature amount information" from the received "fingerprint image". When "fingerprint feature amount information" matched with the extracted "fingerprint feature amount information" exists in the "fingerprint feature amount information stored by the biometric information storage unit 12b, the second authenticating unit 13c authenticates the user. In other words, the second authenticating unit 13c determines that the user is permitted to lend the book. When the "fingerprint feature amount information" matched with the extracted "fingerprint feature amount information" does not exist in the "fingerprint feature amount information stored by the biometric information storage unit 12b, the second authenticating unit 13c determines that the user is not permitted to lend the book.

For example, since the "fingerprint feature amount information: feature amount 00001" matched with the "fingerprint feature amount information" extracted from the "fingerprint image" of the user (identification number: 00001) is stored by the biometric information storage unit 12b as illustrated in FIG. 5B, the second authenticating unit 13c determines that the user (identification number: 00001) is permitted to lend the book.

The success information deleting unit 13d determines whether a predetermined registration time has passed after the predetermined success information is stored, and deletes the predetermined success information when the registration time has passed. In other words, the success information deleting unit 13d refers to setting of a "registration time: 2 hours" that is stored in the storage unit, determines whether "2 hours" have passed from the "first authentication success time" stored together with the identification number, for every success information, and deletes the success information when there is the success information where "2 hours" have passed from the "first authentication success time".

More specifically, as illustrated in FIG. 4C, at a point of time of "2007-04-02/11:00 a.m.", the success information deleting unit 13d deletes the success information of "identification number: 00005" where "2 hours" have passed from the "first authentication success time", and updates the success information that is stored by the success information storage unit 12a.

When the success information stored by the success information storage unit 12a is deleted, the biometric information storage unit 13b deletes the biometric information corresponding to the identification number in the deleted success information. In other words, as illustrated in FIG. 5C, the biometric information storage unit 13b deletes the "feature amount 00005" corresponding to the "identification number: 00005", and updates the biometric information that is stored by the biometric information storage unit 12b.

### Procedure of a process executed by the user authenticating apparatus in the first embodiment

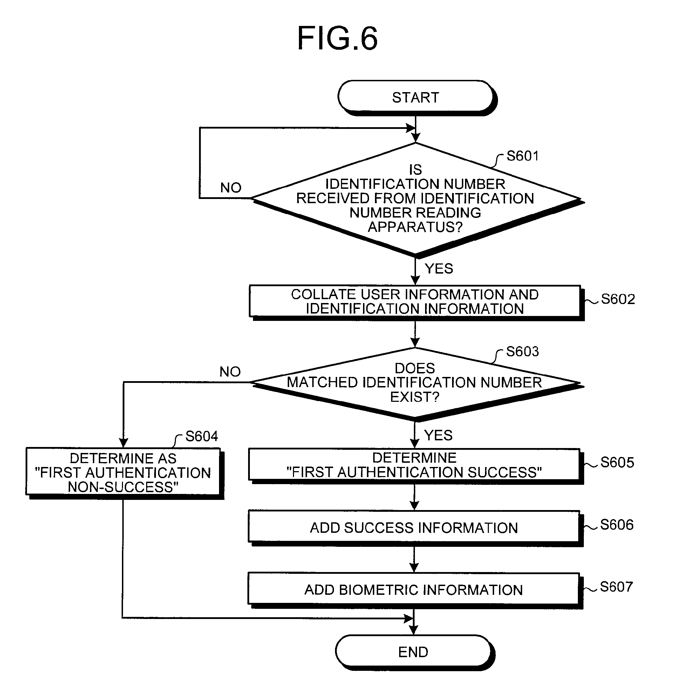

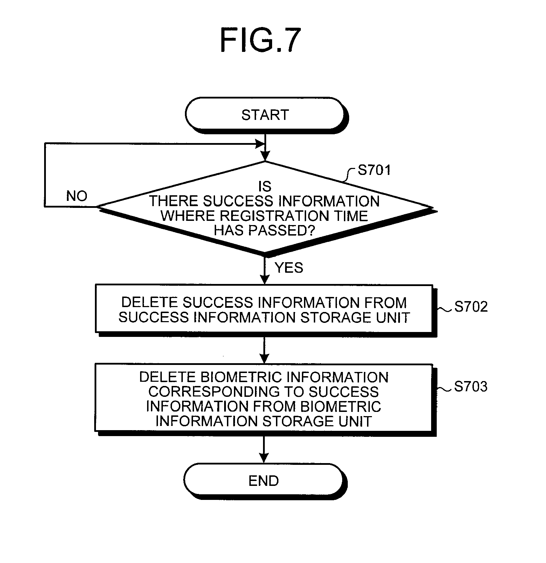

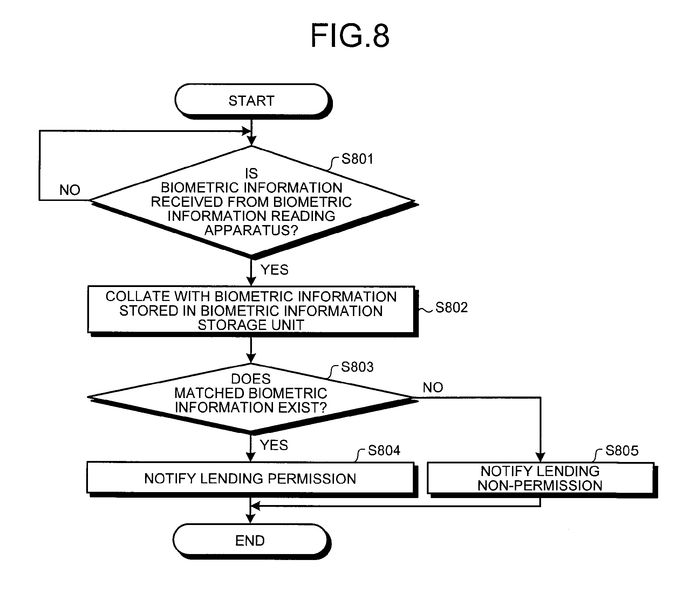

Next, a process that is executed by the user authenticating apparatus 10 in the first embodiment will be described using FIGS. 6 to 8. FIG. 6 is a diagram illustrating a first authenticating process of the user authenticating apparatus in the first embodiment. FIG. 7 is a diagram illustrating a deleting process of success information and biometric information of the user authenticating apparatus in the first embodiment. FIG. 8 is a diagram illustrating a second authenticating process of the user authenticating apparatus in the first embodiment.

### Procedure of a first authenticating process of the user authenticating apparatus in the first embodiment

As illustrated in FIG. 6, first, if the user authenticating apparatus 10 in the first embodiment receives the identification number from the identification number reading apparatus 1 (S601: YES), the first authenticating unit 13a collates the identification number that is received from the identification number reading apparatus 1 and the user information that is stored by the user information storage unit 3 (S602). In other words, if the user authenticating apparatus 10 in the first embodiment receives the identification number of the user who returns the book from the identification number reading apparatus 1, the first authenticating unit 13a determines whether the received identification number exists in the identification numbers registered as the user information in the user information storage unit 3 (S603).

When the identification number matched with the received identification number does not exist in the identification numbers registered as the user information in the user information storage unit 3 (S603: NO), the first authenticating unit 13a determines the authentication result as the "first authentication non-success" and does not permit the user to start to use the library (S604). Then, the first authenticating unit 13a completes the process.

In contrast, when the identification number matched with the received identification number exists in the identification numbers registered as the user information in the user information storage unit 3 (S603: YES), the first authenticating unit 13a determines the authentication result as the "first authentication success" and permits the user to start to use the library (S605).

The first authenticating unit 13a adds the "identification number" of the user whose authentication result is newly determined as the "first authentication success" and the "first authentication success time" corresponding to the time when the "identification number" is received from the identification number reading apparatus 1 as the success information to the success information storage unit 12a and stores the success information (S606).

Next, the biometric information storage unit 13b acquires the biometric information corresponding to the identification number in the added success information from the user information stored by the user information storage unit 3, adds the biometric information to the biometric information storage unit 12b, and stores the biometric information (S607). Then, the biometric information storage unit 13b completes the process. In other words, as illustrated in FIG. 4B, if the "identification number: 00001" is newly added as the success information, the biometric information storage unit 13b acquires the "fingerprint feature amount information: feature amount 00001" corresponding to the "identification number: 00001" from the user information storage unit 3. As illustrated in FIG. 5B, the biometric information storage unit 13b adds the fingerprint feature amount information to the biometric information storage unit 12b and stores the fingerprint feature amount information.

### Procedure of a deleting process of success information and biometric information of the user authenticating apparatus in the first embodiment

As illustrated in FIG. 7, the user authenticating apparatus 10 in the first embodiment always determines whether there is success information where the registration time has passed (S701). In other words, the success information deleting unit 13d refers to the setting of "registration time: 2 hours" that is stored in the storage unit, and always determines whether "2 hours" have passed from the "first authentication success time" stored together with the identification number, for every success information.

When it is determined that there is success information where the registration time has passed (S701: YES), the success information deleting unit 13d deletes the success information from the success information storage unit 12a (S702). Specifically, as illustrated in FIG. 4C, at the point of time "2007-04-02/11:00 a.m.", the success information deleting unit 13d deletes the success information of the "identification number: 00005" where "2 hours" have passed from the "first authentication success time", and updates the success information that is stored by the success information storage unit 12a.

The biometric information storage unit 13b deletes the biometric information corresponding to the identification number in the deleted success information from the biometric information storage unit 12b (S703), and completes the process. Specifically, as illustrated in FIG. 5C, the biometric information storage unit 13b deletes the "feature amount 00005" corresponding to the "identification number: 00005", and updates the biometric information that is stored by the biometric information storage unit 12b.

In this embodiment, the case where the success information deleting unit 13d always monitors the passage time after the success information is stored has been described, but the present invention is not limited thereto. The success information deleting unit 13d may monitor the passage time after the success information is stored, for every predetermined time (for example, every 5 minutes).

### Procedure of a second authenticating process of the user authenticating apparatus in the first embodiment

As illustrated in FIG. 8, first, if the user authenticating apparatus 10 in the first embodiment receives the biometric information from the biometric information reading apparatus 2 (S801: YES), the second authenticating unit 13c collates the received biometric information and the biometric information stored in the biometric information storage unit 12b (S802). Specifically, the second authenticating unit 13c extracts the "fingerprint feature amount information" from the received "fingerprint image", and determines whether the "fingerprint feature amount information" matched with the extracted "fingerprint feature amount information" exists in the "fingerprint feature amount information" stored by the biometric information storage unit 12b.

When the "fingerprint feature amount information" matched with the extracted "fingerprint feature amount information" does not exist in the "fingerprint feature amount information" stored by the biometric information storage unit 12b (S803: NO), the second authenticating unit 13c notifies the biometric information reading apparatus 2 of "lending non-permission" indicating that the user is not permitted to lend the book (S805), and completes the process.

Meanwhile, when the "fingerprint feature amount information" matched with the extracted "fingerprint feature amount information" exists in the "fingerprint feature amount information" stored by the biometric information storage unit 12b (S803: YES), the second authenticating unit 13c notifies the biometric information reading apparatus 2 of "lending permission" indicating that the user is permitted to lend the book (S804), and completes the process.

For example, since the "fingerprint feature amount information: feature amount 00001" matched with the "fingerprint feature amount information" extracted from the "fingerprint image" of the user (identification number: 00001) is stored by the biometric information storage unit 12b as illustrated in FIG. 5B, the second authenticating unit 13c determines that the user (identification number: 00001) is permitted to lend the book.

### Effect of the first embodiment

As described above, according to the first embodiment, the user authenticating apparatus stores the user information where the identification information to identify each of the plural users registered in the library and the "fingerprint feature amount information" as the biometric information of each user are associated with each other, acquires the identification information of the user from the user who returns the book, authenticates the user who desires to start to use the library using the acquired identification information and the stored user information, as the first authentication, stores the identification information of the user whose first authentication is succeeded as the success information, acquires the "fingerprint image" of the user who desires to lend the book, and authenticates the user who desires to lend the book using the "fingerprint feature amount information" extracted from the acquired "fingerprint image" and the "fingerprint feature amount information" corresponding to the identification information of the users stored as the success information among the stored "fingerprint feature amount information", as the second authentication. Therefore, the user authenticating apparatus can narrow down the users who return the books and are authenticated to start to use the library as the collation targets of the "1:N authentication" at the time of lending the books, and can improve authentication performance.

According to the first embodiment, the user authenticating apparatus determines whether the predetermined registration time has passed after the predetermined success information is stored in the success information storage unit 12a, and deletes the predetermined success information from the success information storage unit 12a, when the registration time has passed. Therefore, the user authenticating apparatus can exclude the users who rarely require to lend the books among the users authenticated to start to use the library from the collation targets of the "1:N authentication", and can improve authentication performance.

According to the first embodiment, the user authenticating apparatus acquires the "fingerprint feature amount information" corresponding to the identification information of the user stored as the success information from the user information storage unit 3, and stores the fingerprint feature amount information in the biometric information storage unit 12b. In the second authentication, since the user authenticating apparatus can authenticate the user using the "fingerprint feature amount information" stored in the biometric information storage unit 12b, the user authenticating apparatus can increase a processing speed at the time of the "1:N authentication" and can improve authentication performance.

### Second Embodiment

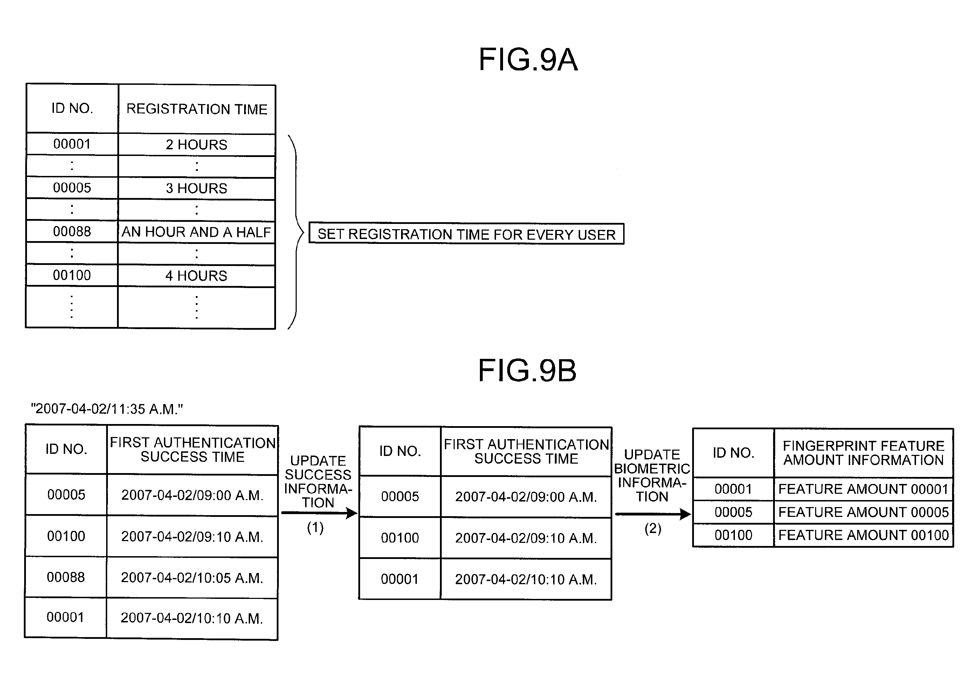

In the above-described first embodiment, the case where the registration time of the success information is equally set for all of the users has been described. However, in the second embodiment, the case where a registration time of success information is differently set for each user will be described using FIG. 9. FIG. 9 is a diagram illustrating a user authenticating apparatus in the second embodiment.

As illustrated in FIG. 9A, the user authenticating apparatus in the second embodiment associates an identification number allocated to each user and a registration time of success information set to each user and stores the association result. For example, as illustrated in FIG. 9A, the user authenticating apparatus in the second embodiment stores a registration time of an "identification number: 00001" as "2 hours", stores a registration time of an "identification number: 00005" as "3 hours", stores a "registration time" of an "identification number: 00088" as "an hour and a half", and stores a registration time of an "identification number: 00100: as "4 hours".

The success information deleting unit 13d in the second embodiment determines whether the registration time set for each user has passed after the predetermined success information is stored in the success information storage unit 12a, and deletes the predetermined success information from the success information storage unit 12a, when the set registration time has passed.

For example, as illustrated in FIG. 9B, the success information deleting unit 13d in the second embodiment determines that "a hour and a half" corresponding to the "registration time" of the "identification number: 00088" has passed in the success information of the "identification number: 00088 and first authentication success time: 2007-04-02/10:05 a.m.", at a point of time "2007-04-02/11:35 a.m.". The success information deleting unit 13d in the second embodiment deletes the success information and updates the success information of the success information storage unit 12a (refer to (1) of FIG. 9B).

As in the case with the first embodiment, if the success information of the success information storage unit 12a is deleted and updated, the biometric information storage unit 13b in the second embodiment deletes the biometric information (fingerprint feature amount information) that corresponds to the identification information of the deleted success information, and updates the biometric information of the biometric information storage unit 12b (refer to (2) of FIG. 9B).

In this way, the user authenticating apparatus in the second embodiment can set the registration time to each user, on the basis of a behavior history of each user in the library, and can flexibly narrow down the collation targets of the "1:N authentication", on the basis of a feature of each user. Therefore, the user authenticating apparatus can improve authentication performance.

### Third Embodiment

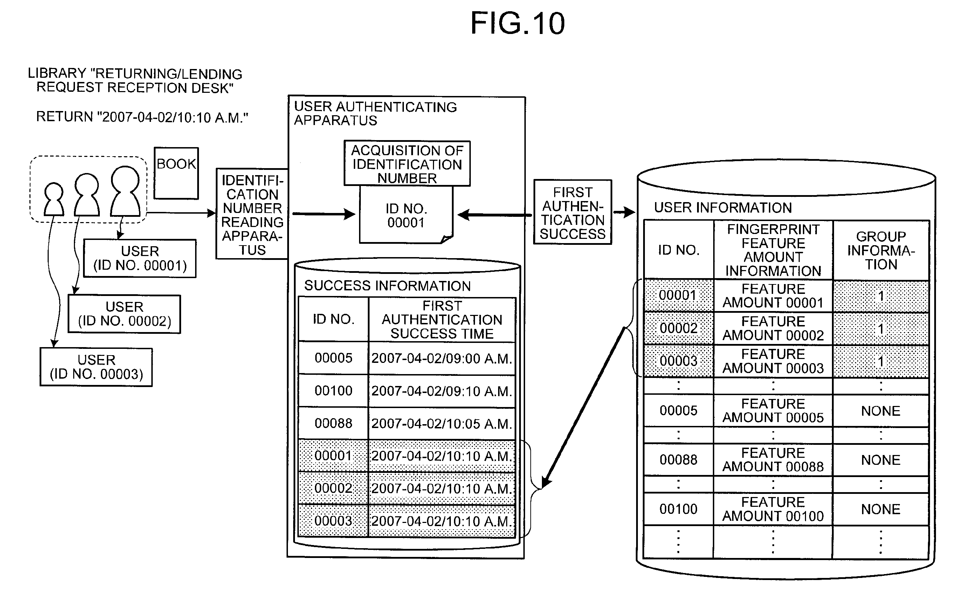

In the above-described first embodiment, the case where the biometric information of the user whose first authentication is succeeded is added to the collation targets of the second authentication has been described. However, in the third embodiment, the case where the biometric information of the user whose first authentication is succeeded and the biometric information of the users of a group that the user belongs are added to the collation targets of the second authentication will be described using FIG. 10. FIG. 10 is a diagram illustrating a user authenticating apparatus in the third embodiment.

The user authenticating apparatus in the third embodiment associates "group information" to identify a group that each user belongs with "identification information" of each user and stores the association result. Specifically, as illustrated in FIG. 10, the user information storage unit 3 in the third embodiment associates the "group information" with the "identification number" and the "fingerprint feature amount information" and stores the association result. For example, since the user having the "identification information: 00001", the user having the "identification information: 00002", and the user having the "identification information: 00003" who are registered as the users of the library belong to the same family, "group information: 1" is given to the users. However, "group information: none" is given to the user having the "identification information: 00005", the user having the "identification information: 00088", and the user having the "identification information: 00100".

The success information storage unit 12a in the third embodiment stores the identification information of the user who is successfully authenticated by the first authenticating unit 13a and identification information of the other users corresponding to the group information of the user as the success information.

In other words, as in the case with the first embodiment, the first authenticating unit 13a in the third embodiment acquires the "identification number: 00001" from the IC card provided by the user having the "identification number: 00001" who visits the library together with the family to return the lent books at the point of time "2007-04-02/10:10 a.m.", through the identification number reading apparatus 1, as illustrated in FIG. 10. Since the acquired "identification number: 00001" exists in the identification numbers registered as the user information, the first authenticating unit 13a determines the authentication result as the "first authentication success", and permits the user (identification number: 00001" to start to use the library.

The first authenticating unit 13a in the third embodiment adds the "identification number: 00001" whose authentication result is determined as the "first authentication success" and the "identification information: 00002" and the identification information: 00003" corresponding to the "group information: 1" given to the "identification number: 00001" as the success information together with the "first authentication success time: 2007-04-02/10:10 a.m.", and stores the success information in the success information storage unit 12a. Thereby, the biometric information storage unit 13b adds the "fingerprint feature amount information: feature amount 00001" corresponding to the "identification number: 00001", the "fingerprint feature amount information: feature amount 00002" corresponding to the "identification number: 00002", and the "fingerprint feature amount information: feature amount 00003" corresponding to the "identification number: 00003" to the biometric information storage unit 12b and stores the information.

In this way, the user authenticating apparatus in the third embodiment can add the users who is likely to request the authentication at the time of lending, like the users who are authenticated to start to use the library, to the collation targets of the "1:N authentication", and can improve authentication performance.

### Fourth Embodiment

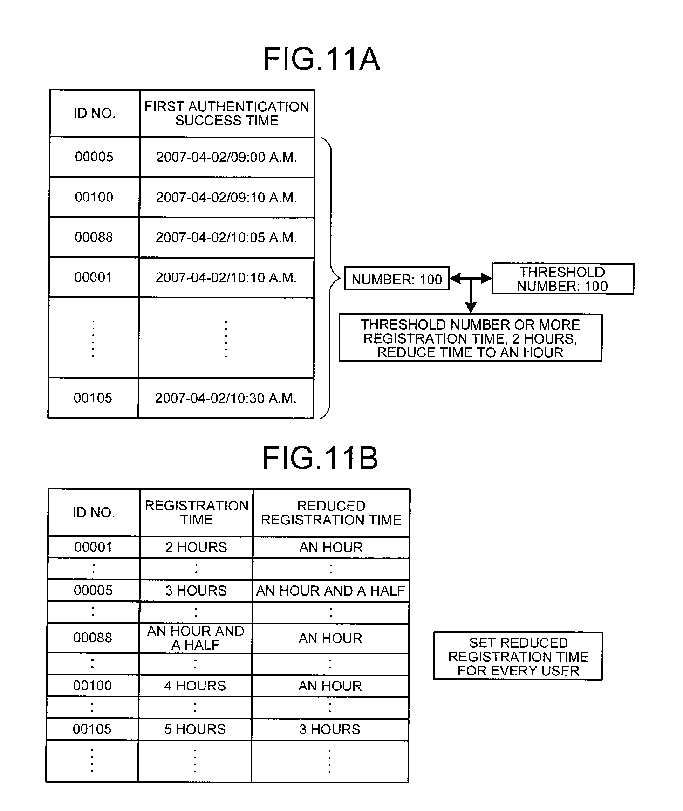

In the above-described first and second embodiments, the case where the registration time of the set success information is constant has been described. However, in the fourth embodiment, the case where a set registration time of success information is reduced and reset according to a situation will be described using FIG. 11. FIG. 11 is a diagram illustrating a user authenticating apparatus in the fourth embodiment.

When the number of success information stored in the success information storage unit 12a becomes a predetermined value or more, the user authenticating apparatus in the fourth embodiment determines whether the registration time has passed, using the registration time shorter than the registration time used for a determination when the number of success information is smaller than the predetermined value.

For example, in the first embodiment, as illustrated in FIG. 11A, when the "identification number: 00105 and first authentication success time: 2007-04-02/10:30 a.m." are stored as the 100-th success information in the success information storage unit 12a by the first authenticating unit 13a, the success information deleting unit 13d in the fourth embodiment reduces the "registration time" stored as "2 hours" in the storage unit to "an hour" and resets the registration time, because the number of success information stored in the success information storage unit 12a becomes equal to larger than "100" set as the " threshold number".

The success information deleting unit 13d in the fourth embodiment deletes the success information of the "identification number: 00005" and the success information of the "identification number: 00100" that pass the reset "registration time: an hour", at the point of time "2007-04-02/10:30 a.m.".

In this case, since the situation illustrated in FIG. 11A corresponds to the situation generated in the second embodiment, as illustrated in FIG. 11B, the user authenticating apparatus may set the "registration time" to be associated with the "identification information" of each user and store the registration time, and may further set the "reduced registration time" and store the reduced registration time. For example, as illustrated in FIG. 11B, the user authenticating apparatus in the fourth embodiment stores the "reduced registration time" of the "identification number: 00001" as "an hour", stores the "reduced registration time" of the "identification number: 00005" as "a hour and a half", stores the "reduced registration time" of the "identification number: 00088" as "an hour", and stores the "reduced registration time" of the "identification number: 00100" as "an hour".

When the number of success information stored in the success information storage unit 12a becomes equal to or larger than "100" set as the "threshold number", the success information deleting unit 13d in the fourth embodiment determines whether a time after the success information is stored in the success information storage unit 12a has passed the "reduced registration time", and deletes the success information whose time has passed the "reduced registration time". For example, the success information deleting unit 13d in the fourth embodiment deletes the success information of the "identification number: 00001" whose time has passed the "reduced registration time", at the point of time "2007-04-02/10:30 a.m.".

As in the case with the first and second embodiments, when the success information of the success information storage unit 12a is deleted and updated, the biometric information storage unit 13b in the fourth embodiment deletes the biometric information (fingerprint feature amount information) corresponding to the identification number of the deleted success information, and updates the biometric information of the biometric information storage unit 12b.

In this way, even when the number of success information increases, the user authenticating apparatus in the fourth embodiment can decrease the collation targets of the "1:N authentication" by reducing the registration time. As a result, the user authenticating apparatus can reduce a time needed to execute the collating process and can improve authentication performance.

### Fifth Embodiment

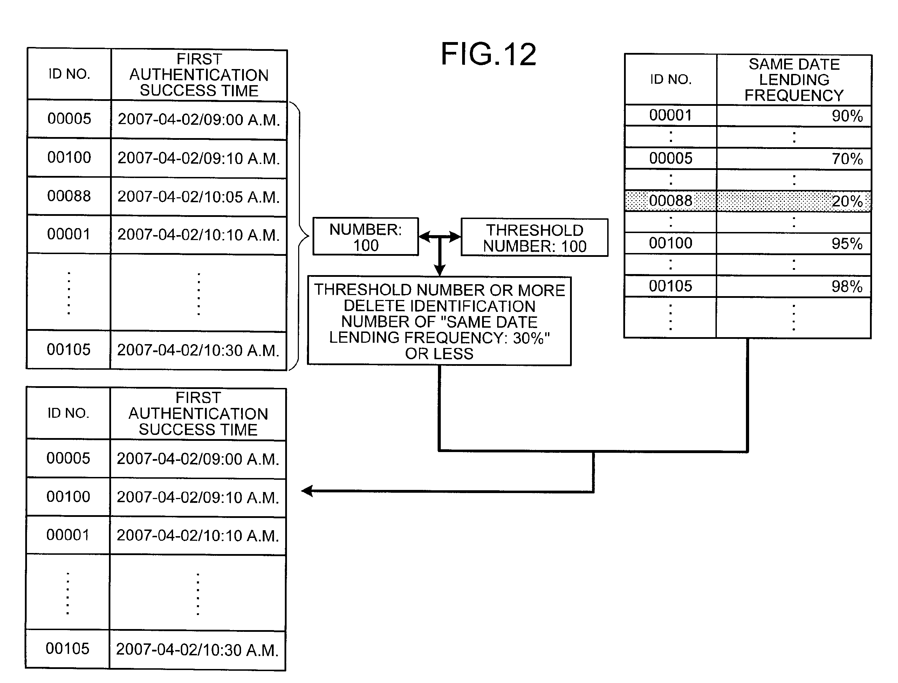

In the above-described fourth embodiment, the case where the set registration time of the success information is reduced and the collation targets are reduced, when the number of success information becomes the predetermined number or more, has been described. However, in the fifth embodiment, the case where the collation targets are reduced by referring to use frequencies of the users, when the number of success information becomes the predetermined number or more, will be described using FIG. 12. FIG. 12 is a diagram illustrating a user authenticating apparatus in the fifth embodiment.

The user authenticating apparatus in the fifth embodiment stores a "same date lending frequency" corresponding to a frequency by which the user who returns to the predetermined product lends the predetermined product at the same date as the use frequency of the user. In other words, the user authenticating apparatus associates a "same date lending frequency" corresponding to a frequency by which the user who returns the book in the library lends a new book at the same date with the "identification number" allocated to each user and stores the association result. For example, as illustrated in FIG. 12, the user authenticating apparatus associates a "same date lending frequency: 90%" with the "identification number: 00001" and stores the association result, associates a "same date lending frequency: 70%" with the "identification number: 00005" and stores the association result, associates a "same date lending frequency: 20%" with the "identification number: 00088" and stores the association result, associates a "same date lending frequency: 95%" with the "identification number: 00100" and stores the association result, and associates a "same date lending frequency: 98%" with the "identification number: 00105" and stores the association result.

When the number of success information stored in the success information storage unit 12a becomes the predetermined value or more, the success information deleting unit 13d in the fifth embodiment further deletes the success information of the user whose "same date lending frequency" is smaller than the predetermined value from the success information storage unit 12a, on the basis of the "same date lending frequencies" corresponding to the use frequencies of the individual users. For example, as illustrated in FIG. 12, when the "identification number: 00105 and first authentication success time: 2007-04-02/10:30 a.m." as the 100-th success information is stored in the success information storage unit 12a by the first authenticating unit 13a, the success information deleting unit 13d in the fourth embodiment deletes the success information corresponding to the "identification number: 00088" of which the same date lending frequency is not more than the "same date lending frequency: 30%", because the number of success information stored in the success information storage unit 12a becomes equal to or larger than "100" set as the "threshold number."

As in the case with the first, second, and fourth embodiments, when the success information of the success information storage unit 12a is deleted and updated, the biometric information storage unit 13b in the fifth embodiment deletes the biometric information (fingerprint feature amount information) corresponding to the identification number of the deleted success information, and updates the biometric information of the biometric information storage unit 12b.

In this way, even when the number of success information increases, the user authenticating apparatus in the fifth embodiment can delete the success information of the users who rarely request the authentication to request to lend the books in the library and reduce the collation targets of the "1:N authentication". As a result, the user authenticating apparatus can reduce a time needed to execute the collating process and can improve authentication performance.

### Sixth Embodiment

In the above-described first to fifth embodiments, the case where the first authentication and the second authentication as the user authentication are performed by one apparatus has been described. However, in the sixth embodiment, a user authenticating system where the first authentication and the second authentication as the user authentication are performed by separately disposed apparatuses will be described.

### Outline and characteristics of a user authenticating system in the sixth embodiment

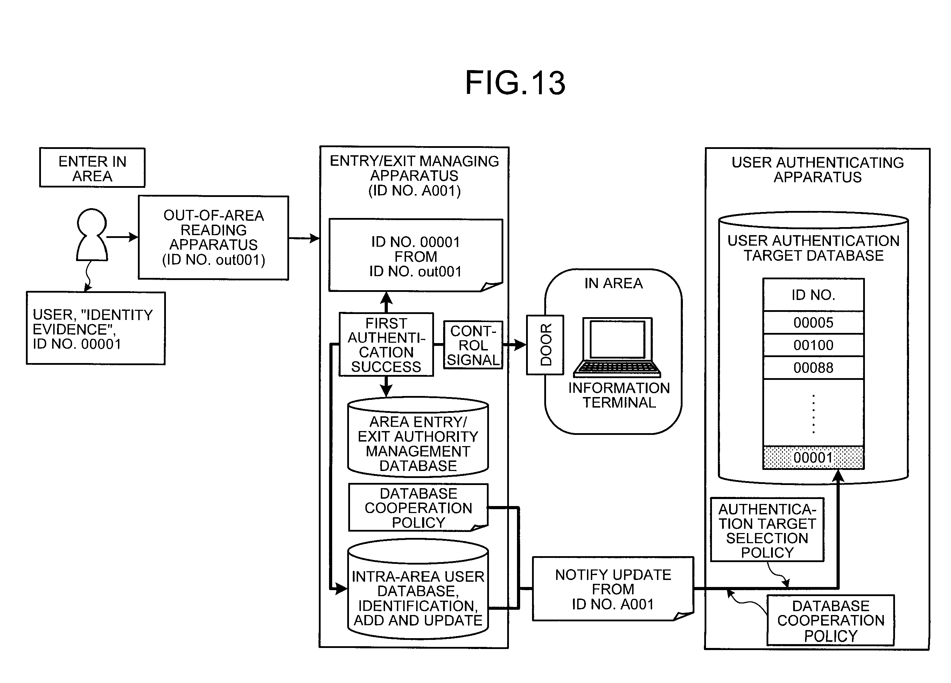

First, a main characteristic of the user authenticating system in the sixth embodiment will be specifically described using FIGS. 13 to 15. FIGS. 13 to 15 are diagrams illustrating the outline and characteristic of the user authenticating system in the sixth embodiment.

As illustrated in FIG. 13, the user authenticating system in the sixth embodiment includes an area entry/exit managing apparatus that performs an entry/exit management of a user in an area provided in a facility by the first authentication, and a user authenticating apparatus that performs a use start management by a user of an information terminal disposed in the area by the second authentication.

When the user enters the area, the area entry/exit managing apparatus that constitutes the user authenticating system in the sixth embodiment acquires the identification information of the user. In other words, the area entry/exit managing apparatus acquires an "identification number" as an identity evidence of a user who requests to enter the area, through an out-of-area reading apparatus disposed outside the area. For example, as illustrated in FIG. 13, the area entry/exit managing apparatus acquires the "identification number: 00001" of the user who requests to enter the area, through the out-of-area reading apparatus (identification number: out001). The area entry/exit managing apparatus that constitutes the user authenticating system in the sixth embodiment simultaneously acquires the "identification number: 00001" and the "identification number: out001" of the out-of-area reading apparatus that has read the identification number of the user.

The area entry/exit managing apparatus that constitutes the user authenticating system in the sixth embodiment authenticates the user using the acquired "identification number of the user" and the "identification information of the users who have an area entry/exit authority" stored in an area entry/exit authority management database, as the first authentication. The area entry/exit managing apparatus authenticates the user using the "identification number of the out-of-area reading apparatus" acquired at the same time as the "identification number of the user" and the "identification information of the out-of-area reading apparatus disposed to perform the area entry/exit management", which is stored in the area entry/exit authority management database.

In other words, when the identification number matched with the "identification number: 00001" of the user who requires to enter the area exists in the "identification numbers" of the users stored in the area entry/exit authority management database and the identification number matched with the "identification number: out001" of the out-of-area reading apparatus exists in the "identification information" of the out-of-area reading apparatus stored in the area entry/exit authority management database, the area entry/exit managing apparatus determines the authentication result as the "first authentication success", and permits the user having the "identification number: 00001" to enter the area. For example, as illustrated in FIG. 13, the area entry/exit managing apparatus transmits a control signal to a door provided at a boundary between the inner portion and the external portion of the area and unlocks the door. Meanwhile, when neither the "identification number: 00001" of the user nor the "identification number: out001" of the out-of-area reading apparatus exists in the area entry/exit authority management database, the area entry/exit managing apparatus determines the authentication result as the "first authentication non-success", does not permit the user having the "identification number: 00001" to enter the area, transmits a control signal to the door, and locks the door.

The area entry/exit managing apparatus that constitutes the user authenticating system in the sixth embodiment stores the identification information of the user who successfully enters the area as the success information in an intra-area user database, by the first authentication. For example, as illustrated in FIG. 13, the area entry/exit managing apparatus adds the "identification number: 00001" of the user who is newly permitted to enter the area to the intra-area user database and stores the user information.

The area entry/exit managing apparatus that constitutes the user authenticating system in the sixth embodiment refers to a database cooperation policy to notify the user authenticating apparatus of the identification information as the success information added and updated in the intra-area user database. The database cooperation policy stores information that specifies the user authenticating apparatus performing the second authentication in cooperation with the area entry/exit managing apparatus. The area entry/exit managing apparatus that constitutes the user authenticating system in the sixth embodiment transmits the added and updated identification number and the identification number corresponding to the information to specify the area entry/exit managing apparatus to the user authenticating apparatus. For example, as illustrated in FIG. 13, the area entry/exit managing apparatus refers to the database cooperation policy to notify the user authenticating apparatus of the added and updated "identification number: 00001" and the "A001" corresponding to the identification number of the area entry/exit managing apparatus.

The user authenticating apparatus that constitutes the user authenticating system in the sixth embodiment stores the "identification number" of the user, which is received from the area entry/exit managing apparatus, in a user authentication target database. At this time, only when the database cooperation policy is referred to and the identification number of the area entry/exit managing apparatus received together with the "identification number" of the user is the identification number of the area entry/exit managing apparatus performing the first authentication in cooperation with the user authenticating apparatus, and an authentication target selection policy is referred to and the received "identification number" of the user is included in the identification numbers" of the users who request the authentication to use the information terminal in the area and are permitted to use the information terminal, the user authenticating apparatus that constitutes the user authenticating system in the sixth embodiment stores the received "identification number" of the user in the user authentication target database.

For example, as illustrated in FIG. 13, since "A001" corresponding to the identification number of the area entry/exit managing apparatus fulfills the database cooperation policy and the added and updated "identification number: 00001" fulfills the authentication target selection policy, the user authenticating apparatus that constitutes the user authenticating system in the sixth embodiment adds the "identification number: 00001" to the user authentication target database and stores the user information.

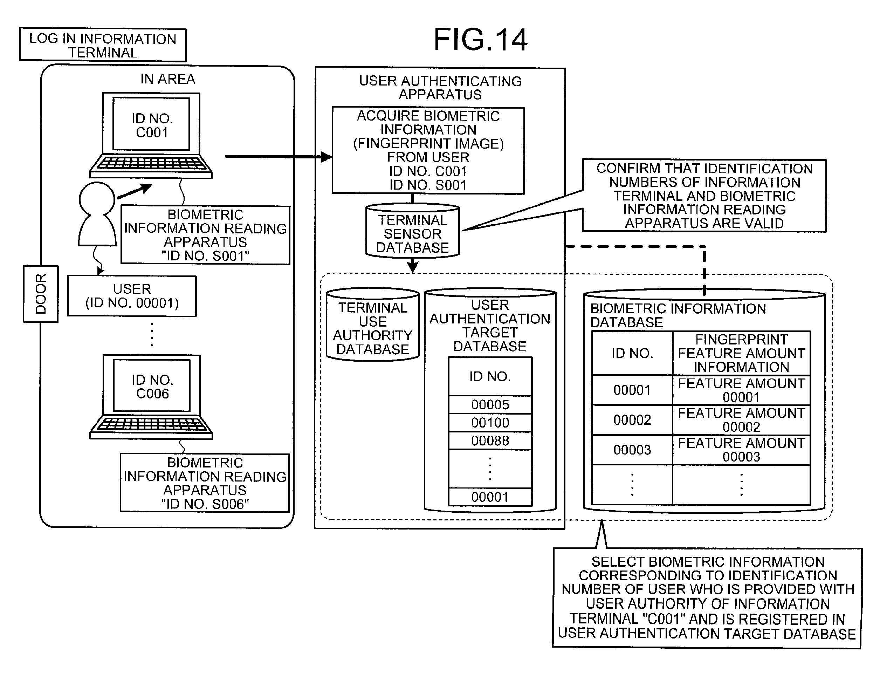

Meanwhile, the user authenticating apparatus that constitutes the user authenticating system in the sixth embodiment previously stores user information where the identification information to identify each of the plural users and the biometric information of each user are associated with each other. Specifically, the user authenticating apparatus that constitutes the user authenticating system in the sixth embodiment stores a biometric information database where the identification information to identify each of the plural users previously registered as the users in the area and the "fingerprint feature amount information" extracted from the "fingerprint image" corresponding to the biometric information of each user are associated with each other. For example, as illustrated in FIG. 14, the user authenticating apparatus stores the biometric information database where the "identification number: 00001" and the "fingerprint feature amount information: feature amount 00001" are associated with each other.

The user authenticating apparatus that constitutes the user authenticating system in the sixth embodiment acquires the "fingerprint image" corresponding to the biometric information from the user who requests the authentication to log in the information terminal disposed in the area, through the biometric information reading apparatus connected to the information terminal. The user authenticating apparatus that constitutes the user authenticating system in the sixth embodiment acquires the "fingerprint image" corresponding to the biometric information, the identification number of the biometric information reading apparatus that has read the biometric information, and the identification number of the information terminal connected to the biometric information reading apparatus.

For example, as illustrated in FIG. 14, the user authenticating apparatus that constitutes the user authenticating system in the sixth embodiment acquires the "fingerprint image" corresponding to the biometric information of the user having the "identification number: 00001", the "identification number: S001" of the biometric information reading apparatus reading the biometric information, and the "identification number: C001" of the information terminal connected to the biometric information reading apparatus. Only when it is confirmed by referring to a terminal sensor database that a combination of the received identification number of the information terminal and the identification number of the biometric information reading apparatus is valid, the user authenticating apparatus that constitutes the user authenticating system in the sixth embodiment performs the second authentication according to the authentication request from the user to log in the information terminal. For example, as illustrated in FIG. 14, since the combination of the "identification number: C001" of the information terminal and the "identification number: S001" of the biometric information reading apparatus is valid, the user authenticating apparatus performs the second authentication according to the authentication request from the user having the "identification number: 00001" to log in the information terminal.

The user authenticating apparatus that constitutes the user authenticating system in the sixth embodiment authenticates the user using the acquired biometric information and the biometric information corresponding to the identification information of the users stored in the user authentication target database as the success information among the stored biometric information, as the second authentication. Specifically, as illustrated in FIG. 14, the user authenticating apparatus that constitutes the user authenticating system in the sixth embodiment further refers to a terminal use authority database to select the identification number of the user who is the "user having the use authority in the information terminal (identification number: C001) requesting login" and the "user registered in the user authentication target database", reads only the biometric information corresponding to the selected identification number from the biometric information database, and authenticates the user using the acquired biometric information and the read biometric information.

In other words, when the "fingerprint feature amount information" is extracted from the "fingerprint image" corresponding to the acquired biometric information and the "fingerprint feature amount information" matched with the extracted "fingerprint feature amount information" exist in the "fingerprint feature amount information" corresponding to the selected biometric information, the user authenticating apparatus authenticates the user. In other words, the user authenticating apparatus determines that the user is permitted to log in the information terminal (identification number: C001). Meanwhile, when the "fingerprint feature amount information" matched with the extracted "fingerprint feature amount information" does not exist in the "fingerprint feature amount information" corresponding to the selected biometric information, the user authenticating apparatus determines that the user is not permitted to log in the information terminal (identification number: C001).

For example, as illustrated in FIG. 14, when the "fingerprint feature amount information: feature amount 00001" matched with the "fingerprint feature amount information" extracted from the "fingerprint image" of the user (identification number: 00001) exists in the selected "fingerprint feature amount information", the user authenticating apparatus determines that the user (identification number: 00001) is permitted to log in the information terminal (identification number: C001).

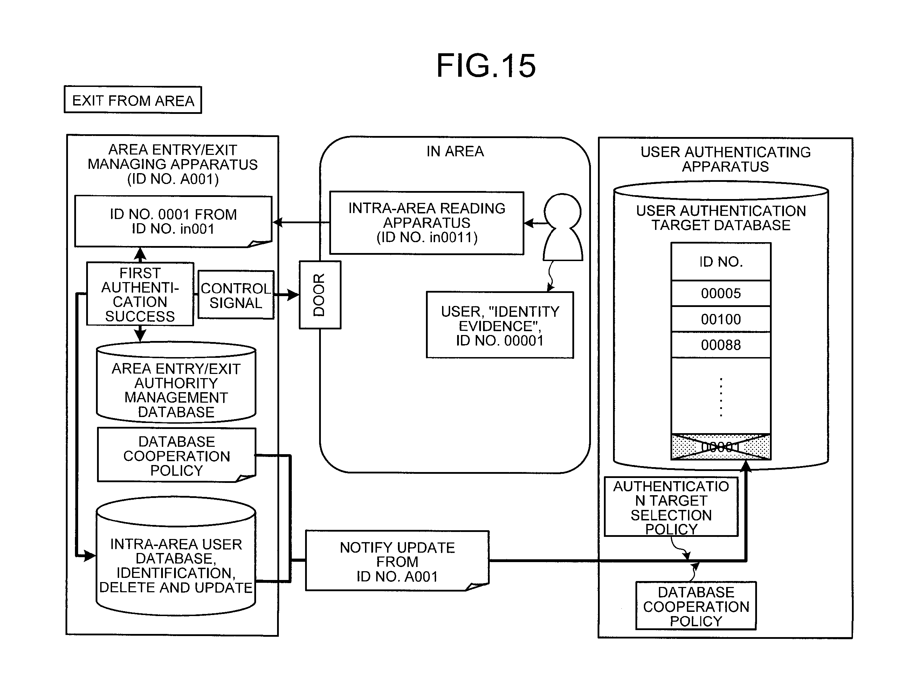

Meanwhile, even when the user completes the use of the information terminal disposed in the area and exits from the area, the area entry/exit managing apparatus that constitutes the user authenticating system in the sixth embodiment acquires the identification information of the user. In other words, the area entry/exit managing apparatus acquires an "identification number" as an identity evidence of a user who requests to exit from the area, through the intra-area reading apparatus disposed in the area. For example, as illustrated in FIG. 15, the area entry/exit managing apparatus acquires the "identification number: 00001" of the user who requests to exit from the area, through the intra-area reading apparatus (identification number: in001). The area entry/exit managing apparatus that constitutes the user authenticating system in the sixth embodiment simultaneously acquires the "identification number: 00001" and the "identification number: in001" of the intra-area reading apparatus that has read the identification number of the user.

The area entry/exit managing apparatus that constitutes the user authenticating system in the sixth embodiment authenticates the user using the acquired "identification number of the user" and the "identification information of the users who have an area entry/exit authority", which are stored in the area entry/exit authority management database, as the first authentication. The area entry/exit managing apparatus authenticates the user using the "identification number of the intra-area reading apparatus" acquired at the same time as the "identification number of the user" and the "identification information of the intra-area reading apparatus disposed to perform the "area exit management, which is stored in the area entry/exit authority management database.

In other words, when the identification number matched with the "identification number: 00001" of the user who requires to exit from the area exists in the "identification numbers" of the users stored in the area entry/exit authority management database and the identification number matched with the "identification number: in001" of the intra-area reading apparatus exists in the "identification information" of the intra-area reading apparatus stored in the area entry/exit authority management database, the area entry/exit managing apparatus determines the authentication result as the "first authentication success", and permits the user having the "identification number: 00001" to exit from the area. For example, the area entry/exit managing apparatus unlocks the door that is disposed at the boundary between the inner portion and the external portion of the area.

The area entry/exit managing apparatus that constitutes the user authenticating system in the sixth embodiment deletes the identification information of the user who successfully exits from the area from the success information stored in the intra-area user database and updates the intra-area user database, by the first authentication. For example, as illustrated in FIG. 15, the area entry/exit managing apparatus deletes the "identification number: 00001" of the user who is newly permitted to exit from the area from the intra-area user database and updates the intra-area user database.

The area entry/exit managing apparatus that constitutes the user authenticating system in the sixth embodiment refers to the database cooperation policy to notify the user authenticating apparatus of the identification number as the success information deleted and updated in the intra-area user database. The area entry/exit managing apparatus that constitutes the user authenticating system in the sixth embodiment transmits the added and updated identification number and the identification number corresponding to the information to specify the area entry/exit managing apparatus to the user authenticating apparatus. For example, as illustrated in FIG. 15, the area entry/exit managing apparatus refers to the database cooperation policy to notify the user authenticating apparatus of the deleted and updated "identification number: 00001" and "A001" corresponding to the identification number of the area entry/exit managing apparatus.

The user authenticating apparatus that constitutes the user authenticating system in the sixth embodiment deletes the "identification number" of the user received from the area entry/exit managing apparatus from the user authentication target database and updates the user authentication target database. At this time, only when the database cooperation policy is referred to and the identification number of the area entry/exit managing apparatus received together with the "identification number" of the user is the identification number of the area entry/exit managing apparatus performing the first authentication in cooperation with the user authenticating apparatus, and the authentication target selection policy is referred to and the received "identification number" of the user is included in the identification numbers" of the users who request the authentication and are permitted to use the information terminal in the area, the user authenticating apparatus that constitutes the user authenticating system in the sixth embodiment deletes the received "identification number" of the user from the user authentication target database.

For example, as illustrated in FIG. 15, since "A001" corresponding to the identification number of the area entry/exit managing apparatus fulfills the database cooperation policy and the added and updated "identification number: 00001" fulfills the authentication target selection policy, the user authenticating apparatus that constitutes the user authenticating system in the sixth embodiment deletes the "identification number: 00001" from the user authentication target database and stores the user authentication target database.

In this way, the user authenticating apparatus in the first embodiment can narrow down only the users who are authenticated to enter the area as the collation targets of the "1:N authentication" at the time of the login of the information terminal disposed in the area, and can improve authentication performance.

### Configuration of the area entry/exit managing apparatus in the sixth embodiment

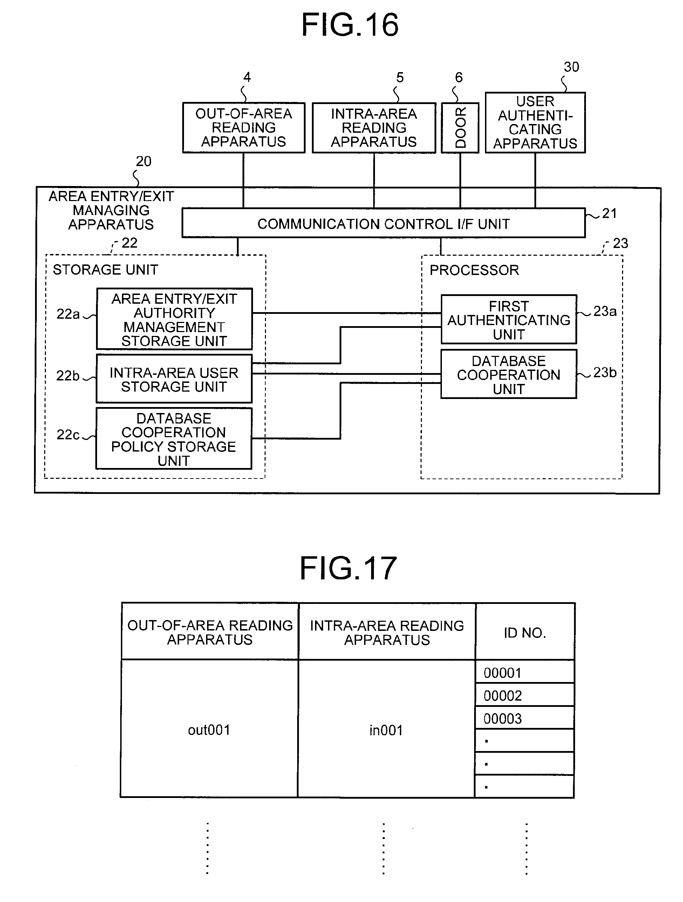

Next, the area entry/exit managing apparatus in the sixth embodiment will be described using FIG. 16. FIG. 16 is a block diagram illustrating the configuration of the area entry/exit managing apparatus in the sixth embodiment.

As illustrated in FIG. 16, an area entry/exit managing apparatus 20 in the sixth embodiment includes a communication control I/F unit 21, a storage unit 22, and a processor 23, and is connected to an out-of-area reading apparatus 4, an intra-area reading apparatus 5, a door 6, and a user authenticating apparatus 30.

When the user enters the area, the out-of-area reading apparatus 4 acquires the identification information of the user and transmits the acquired identification number to the area entry/exit managing apparatus 20. In other words, the out-of-area reading apparatus 4 is disposed outside the area, and acquires the "identification number" as an identity evidence of a user who requests to enter the area. For example, as illustrated in FIG. 13, the out-of-area reading apparatus 4 (identification number: out001) acquires the "identification number: 00001" of the user who requests to enter the area, and transmits the acquired "identification number: 00001" and its "identification number: out001" to the area entry/exit managing apparatus 20.

When the user exits from the area, the intra-area reading apparatus 5 acquires the identification information of the user and transmits the acquired identification number to the area entry/exit managing apparatus 20. In other words, the intra-area reading apparatus 5 is disposed in the area, and acquires the "identification number" as an identity evidence of a user who requests to exit from the area. For example, as illustrated in FIG. 15, the intra-area reading apparatus 5 (identification number: in001) acquires the "identification number: 00001" of the user who requests to exit from the area, and transmits the acquired "identification number: 00001" and its "identification number: in001" to the area entry/exit managing apparatus 20.

The door 6 is disposed at the boundary between the inner portion and the external portion of the area. When a result of the "first authentication" performed by a first authenticating unit 23a to be described in detail below using the "identification number" of the user transmitted from the out-of-area reading apparatus 4 or the intra-area reading apparatus 5 is the "first authentication success", a state of the door 6 becomes an unlocked state from a locked state. When the result of the "first authentication" is the "first authentication non-success", the door 6 maintains the locked state.

The user authenticating apparatus 30 manages the use of the user with respect to the information terminal disposed in the area, through the second authentication. This will be described in detail below.

The communication control I/F unit 21 controls communication that is related to a variety of information exchanged between the out-of-area reading apparatus 4, the intra-area reading apparatus 5, the door 6, the user authenticating apparatus 30, the storage unit 22, and the processor 23. For example, the communication control I/F unit 21 transmits the identification number transmitted by the out-of-area reading apparatus 4 or the intra-area reading apparatus 5 to the processor 23, or transmits a notification of the updated content of the identification number of the user by a database cooperation unit 23b to be described in detail below to the user authenticating apparatus 30.

The storage unit 22 stores various processing results by the processor 23 to be described in detail below. In particular, as a characteristic that is closely connected with the present invention, as illustrated in FIG. 16, the storage unit 22 includes an area entry/exit authority management storage unit 22a, an intra-area user storage unit 22b, and a database cooperation policy storage unit 22c.

The area entry/exit authority management storage unit 22a associates the "identification numbers of the users having an "area entry/exit authority" with the identification numbers of the out-of-area reading apparatus 4 and the intra-area reading apparatus 5 disposed inside and outside the area, and stores the association result. For example, as illustrated in FIG. 17, the area entry/exit authority management storage unit 22a associates "out001" corresponding to the identification number of the out-of-area reading apparatus 4 and "in001" corresponding to the identification number of the intra-area reading apparatus 5 and "00001, 00002, and 00003" corresponding to the "identification information of the users having the area entry/exit authority" and stores the association result. FIG. 17 is a diagram illustrating the area entry/exit authority storage unit in the sixth embodiment.

The intra-area user storage unit 22b stores the results that are obtained after the first authenticating unit 23a to be described in detail below authenticates the identification numbers of the users received from the out-of-area reading apparatus 4 or the intra-area reading apparatus 5. The intra-area user storage unit 22b will be described in detail below.

The database cooperation policy storage unit 22c stores information that specifies the user authenticating apparatus performing the second authentication in cooperation with the area entry/exit managing apparatus 20. For example, the database cooperation policy storage unit 22c stores that the user authenticating apparatus, which performs the second authentication in cooperation with the area entry/exit managing apparatus 20, is the user authenticating apparatus 30.

The processor 23 executes various processes. In particular, as a characteristic that is closely connected with the present invention, as illustrated in FIG. 16, the processor 23 includes the first authenticating unit 23a and the database cooperation unit 23b.

The first authenticating unit 23a authenticates the user using the "identification number of the user" that is received from the out-of-area reading apparatus 4 or the intra-area reading apparatus 5, the identification number of the out-of-area reading apparatus 4 or the intra-area reading apparatus 5 that has acquired the "identification number of the user", and the "identification number of the user having an area entry/exit authority", which is stored in the area entry/exit authority management storage unit 22a. For example, if the first authenticating unit 23a receives the "identification number: 00001" of the user and the "identification number: out001" of the out-of-area reading apparatus 4, the first authenticating unit 23a refers to the combinations stored by the area entry/exit authority management storage unit 22a illustrated in FIG. 17 to determine whether the identification numbers are a valid combination, permits the user having the "identification number: 00001" to enter the area, transmits a control signal to the door 6, and changes the state of the door 6 from the locked state to the unlocked state.

If the first authenticating unit 23a receives the "identification number: 00001" of the user and the "identification number: in001" of the intra-area reading apparatus 5, the first authenticating unit 23a refers to the combinations stored by the area entry/exit authority management storage unit 22a illustrated in FIG. 17 to determine that the identification numbers are a valid combination, permits the user having the "identification number: 00001" to exit from the area, transmits a control signal to the door 6, and changes the state of the door 6 from the locked state to the unlocked state.

When the combination of the received "identification number of the user" and the identification number of the out-of-area reading apparatus 4 or the intra-area reading apparatus 5 that has acquired the "identification number of the user" is not the valid combination, the first authenticating unit 23a does not permit the user having the "identification number: 00001" to enter the area or exit from the area, transmits a control signal to the door 6, and maintains the locked state of the door 6.

The first authenticating unit 23a adds the identification information of the user who successfully enters the area as the success information to the intra-area user storage unit 22b and stores the information. For example, as illustrated in FIG. 13, the first authenticating unit 23a adds the "identification number: 00001" of the user who is newly permitted to enter the area to the intra-area user storage unit 22b and stores the information. The first authenticating unit 23a deletes the identification information of the user who successfully exits from the area from the success information that is stored by the intra-area user database as the success information, and updates the success information. For example, as illustrated in FIG. 15, the first authenticating unit 23a deletes the "identification number: 00001" of the user who is newly permitted to exit from the area, from the intra-area database, and updates the intra-area database.

If the success information that is stored by the intra-area user storage unit 22b is updated, the database cooperation unit 23b refers to the database cooperation policy storage unit 22c to notify the user authenticating apparatus of the updated content of the success information and the identification number of the area entry/exit managing apparatus 20. For example, as illustrated in FIG. 13, the database cooperation unit 23b refers to the database cooperation policy to notify the user authenticating apparatus 30 of the added and updated "identification number: 00001" and [A001] corresponding to the identification number of the area entry/exit managing apparatus. As illustrated in FIG. 15, the database cooperation unit 23b refers to the database cooperation policy to notify the user authenticating apparatus 30 of the deleted and updated "identification number: 00001" and "A001" corresponding to the identification number of the area entry/exit managing apparatus.

The case where the database cooperation unit 23b notifies the user authenticating apparatus of the update whenever the intra-area user storage unit 22b is updated has been described. However, the pieces of success information may be collectively transmitted. As a result, the collation targets of the "1:N authentication" can be narrowed down by collectively executing the addition and deletion of the success information, and authentication performance can be improved.

When the pieces of success information may be collectively transmitted, the success information that are collected for the predetermined time may be collectively transmitted at the predetermined time interval. As a result, a load of the apparatus that is needed to execute an updating process can be alleviated by executing the updating process of the success information at the constant interval, and authentication performance can be improved.

### Configuration of the user authenticating apparatus in the sixth embodiment

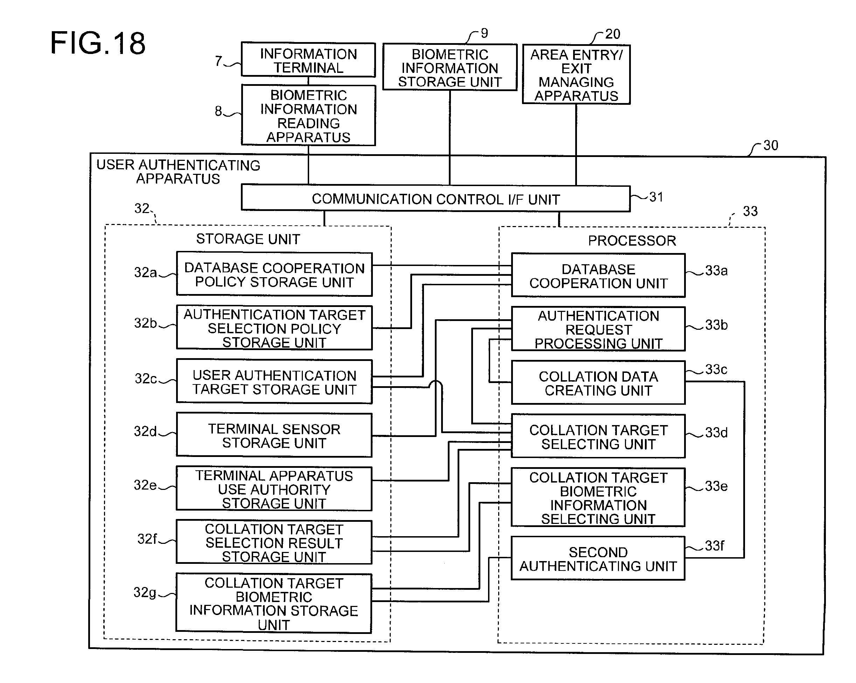

Next, the user authenticating apparatus in the sixth embodiment will be described using FIG. 18. FIG. 18 is a block diagram illustrating the configuration of the user authenticating apparatus in the sixth embodiment.

As illustrated in FIG. 18, the user authenticating apparatus 30 in the sixth embodiment includes a communication control I/F unit 31, a storage unit 32, and a processor 33, and is connected to a biometric information reading apparatus 8, a biometric information storage unit 9, and the area entry/exit managing apparatus 20. The biometric information reading apparatus 8 is further connected to an information terminal 7.

The information terminal 7 is an information terminal, such as a computer, which is disposed in the area. The biometric information reading apparatus 8 is a biometric information reading apparatus that is connected to be associated with the information terminal 7. The biometric information reading apparatus 8 acquires the "fingerprint image" corresponding to the biometric information from the user who requests authentication to log in the information terminal 7 disposed in the area, and transmits the acquired "fingerprint image" to the user authenticating apparatus 30. In FIG. 18, only a combination of the information terminal 7 and the biometric information reading apparatus 8 is illustrated. However, in this embodiment, it is assumed that plural combinations of the information terminals and the biometric information reading apparatuses exist and each of the biometric information reading apparatuses is connected to the user authenticating apparatus.

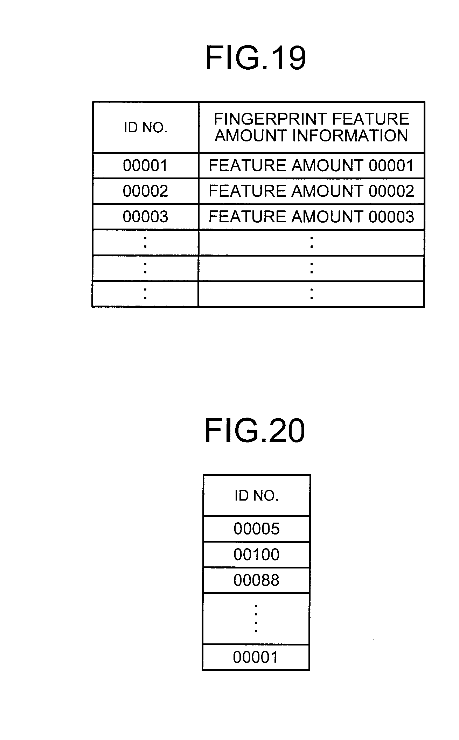

The biometric information storage unit 9 stores user information where identification information to identify each of the plural users and biometric information of each user are associated with each other. Specifically, the biometric information storage unit 9 stores user information where identification information to identify each of the plural users registered as the users in the area and the "fingerprint feature amount information" extracted from the "fingerprint image" corresponding to the biometric information of each user are associated with each other. For example, as illustrated in FIG. 19, the biometric information storage unit 9 associates the "identification number: 00001" and the "fingerprint feature amount information: feature amount 00001" as the user information, and stores the user information. FIG. 19 is a diagram illustrating the biometric information storage unit in the sixth embodiment.

The communication control I/F unit 31 controls communication that is related to a variety of information exchanged between the information terminal 7, the biometric information reading apparatus 8, the area entry/exit managing apparatus 20, the biometric information storage unit 9, the storage unit 32, and the processor 33. For example, the communication control I/F unit 31 transmits the identification information of the information terminal 7, the identification number of the biometric information reading apparatus 8, the "fingerprint information" acquired by the biometric information reading apparatus 8, and the updated content of the success information transmitted by the area entry/exit managing apparatus 20 to the processor 33, or transmits the biometric information, which is acquired from the biometric information storage unit 9 by a second authenticating unit 33f to be described in detail below, to the storage unit 32.

The storage unit 32 stores data used in various processing by the processor 33 to be described in detail below or various process results by the processor 33. In particular, as a characteristic that is closely connected with the present invention, as illustrated in FIG. 18, the storage unit 32 includes a database cooperation policy storage unit 32a, an authentication target selection policy storage unit 32b, a user authentication target storage unit 32c, a terminal sensor storage unit 32d, a terminal apparatus use authority storage unit 32e, a collation target selection result storage unit 32f, and a collation target biometric information storage unit 32g.

The database cooperation policy storage unit 32a stores information to specify the area entry/exit managing apparatus that performs the first authentication in cooperation with the user authenticating apparatus 30. For example, the database cooperation policy storage unit 32a stores that the identification number of the area entry/exit managing apparatus, which performs the first authentication in cooperation with the user authenticating apparatus 30, is the "A001".

The authentication target selection policy storage unit 32b stores the "identification number" of the user who is permitted to use information terminals including the information terminal 7 in the area. For example, the authentication target selection policy storage unit 32b stores the "identification number: 00001" of the user as the "identification number" of the user who is permitted to use the information terminals including the information terminal 7 in the area.

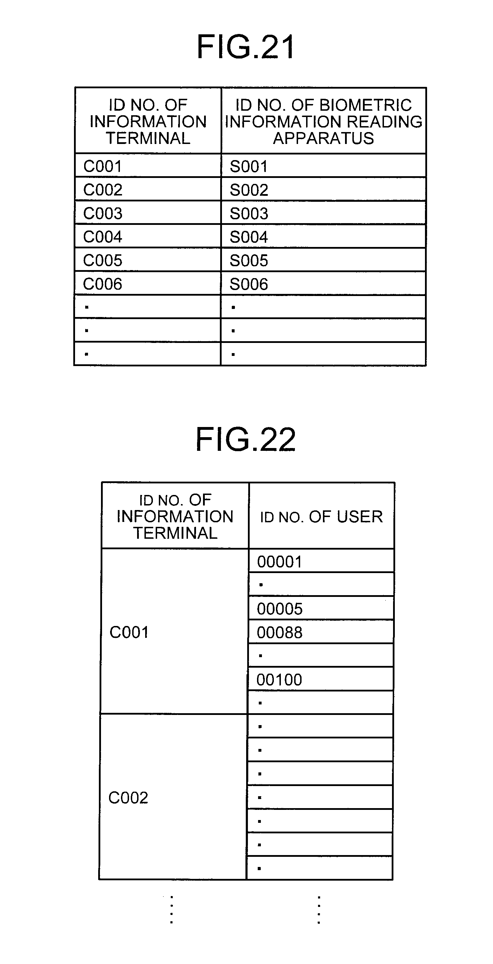

The terminal sensor storage unit 32d stores a combination of the identification numbers of the information terminal and the biometric information reading apparatus connected to the information terminal. In other words, as illustrated in FIG. 21, the terminal sensor storage unit 32d stores that the identification number of the information terminal 7 is "C001", and the identification number of the biometric information reading apparatus 8 connected to the information terminal 7 is "S001". FIG. 21 is a diagram illustrating the terminal sensor storage unit in the sixth embodiment.

The terminal apparatus use authority storage unit 32e associates the identification numbers of the users having a use authority of each of the information terminals disposed in the area with the identification number of each of the information terminals and stores the association result. For example, as illustrated in FIG. 22, the terminal apparatus use authority storage unit 32e stores that the identification numbers of the users who have the use authority of the information terminal 7 having the "identification number: C001" is "00001", "00005", "00088", and "00100". FIG. 22 is a diagram illustrating the terminal apparatus use authority storage unit in the sixth embodiment.

The user authentication target storage unit 32c stores the updated content of the success information determined as being valid by a database cooperation unit 33a to be described in detail below, among the updated contents of the success information received from the area entry/exit managing apparatus 20. The collation target selection result storage unit 32f stores the identification information of the users who are selected as the collation targets by a collation target selecting unit 33d to be described in detail below. The collation target biometric information storage unit 32g acquires the biometric information corresponding to the identification number of the user, which is stored by the collation target selection result storage unit 32f storing the result selected by a collation target biometric information selecting unit 33e to be described in detail below, from the biometric information storage unit 9, and stores the biometric information. The individual storage units will be described in detail below.

The processor 33 executes various processes. In particular, as a characteristic that is closely connected with the present invention, as illustrated in FIG. 18, the processor 33 includes the database cooperation unit 33a, an authentication request processing unit 33b, a collation data creating unit 33c, the collation target selecting unit 33d, the collation target biometric information selecting unit 33e, and the second authenticating unit 33f.

The database cooperation unit 33a stores the added and updated content of the success information (identification number of the user), which is received from the area entry/exit managing apparatus 20, in the user authentication target storage unit 32c. For example, as illustrated in FIG. 13, if the database cooperation unit 33a refers to the database cooperation policy storage unit 32a to determine that the identification number (A001) of the area entry/exit managing apparatus 20 received together with the updated content of the success information (identification number of the user) is the identification number of the area entry/exit managing apparatus 20 performing the first authentication in cooperation with the user authenticating apparatus 30, and refers to the authentication target selection policy storage unit 32b to determine that there is no problem in the "identification number "00001" of the user corresponding to the added and updated content, as illustrated in FIG. 20, the database cooperation unit 33a adds the "identification number: 00001" of the user to the user authentication target storage unit 32c and stores the information. FIG. 20 is a diagram illustrating the user authentication target storage unit in the sixth embodiment.

As illustrated in FIG. 15, if the database cooperation unit 33a refers to the database cooperation policy storage unit 32a to determine that the identification number (A001) of the area entry/exit managing apparatus 20 received together with the deleted and updated content of the success information (identification number of the user) is the identification number of the area entry/exit managing apparatus 20 performing the first authentication in cooperation with the user authenticating apparatus 30, and refers to the authentication target selection policy storage unit 32b to determine that there is no problem in the "identification number "00001" of the user corresponding to the deleted and updated content, the database cooperation unit 33a deletes the "identification number: 00001" of the user from the user authentication target storage unit 32c.

The case where the database cooperation unit 33a updates the database cooperation policy storage unit 32a on the basis of the updated content received from the area entry/exit managing apparatus 20 has been described. However, the database cooperation policy storage unit 32a may always store the identification information of the predetermined user as the success information. Thereby, the user authenticating apparatus can flexibly correspond to needs of the users, for example, by always setting the users having posts of the directors as the collation targets of the "1:N authentication", and can improve authentication performance.

In contrast, the database cooperation policy storage unit 32a may always store the identification information of the predetermined user as the non-success information. Thereby, the user authenticating apparatus can flexibly correspond to needs of the users, for example, by always excluding the users causing a problem in the predetermined area from the collation targets of the "1:N authentication", and can improve authentication performance.

The authentication request processing unit 33b receives the "fingerprint image" corresponding to the biometric information transmitted by the biometric information reading apparatus 8 together with the identification number of the biometric information reading apparatus 8 and the identification number of the information terminal 7 connected to the biometric information reading apparatus 8. For example, the authentication request processing unit 33b acquires the "fingerprint image" of the user having the "identification number: 00001", the "identification number: S001" of the biometric information reading apparatus 8 that has read the biometric information, and the "identification number: C001" of the information terminal 7 that is connected to the biometric information reading apparatus 8.

If the authentication request processing unit 33b refers to the terminal sensor storage unit 32d to determine that there is no problem in the combination of the "identification number: S001" of the biometric information reading apparatus 8 and the "identification number: C001" of the information terminal 7, the authentication request processing unit 33b instructs the collation data creating unit 33c to create the "fingerprint feature amount information" corresponding to the collation data from the "fingerprint image" of the user having the received "identification number: 00001", and instructs the collation target selecting unit 33d to select the identification number of the collation target of the "1:N authentication".

The collation data creating unit 33c creates the "fingerprint feature amount information" from the "fingerprint image" of the user having the "identification number: 00001", on the basis of the instruction of the authentication request processing unit 33b.

The collation target selecting unit 33d selects the identification number of the collation target of the "1:N authentication", on the basis of the instruction of the authentication request processing unit 33b, and stores the selection result in the collation target selection result storage unit 32f. In other words, the collation target selecting unit 33d refers to the terminal apparatus use authority storage unit 32e and the user authentication target storage unit 32b to select the identification number of the user who is the "user having the use authority of the information terminal (identification number: C001) requesting the login" and the "user registered in the user authentication target storage unit 32b".

The collation target biometric information selecting unit 33e acquires the "fingerprint feature amount information", which is the biometric information corresponding to the selected identification number of the user stored by the collation target selection result storage unit 32f, from the biometric information storage unit 9, and stores the acquired "fingerprint feature amount information" in the collation target biometric information storage unit 32g.

The second authenticating unit 33f authenticates the user using the "fingerprint feature amount information" created by the collation data creating unit 33c and the "fingerprint feature amount information" stored by the collation target biometric information storage unit 32g.
In other words, when the "fingerprint feature amount information" matched with the "fingerprint feature amount information" of the user of the "identification number: 00001" created by the collation data creating unit 33c exists in the collation target biometric information storage unit 32g, the second authenticating unit 33f determines that the user having the "identification number: 00001" is permitted to log in the information terminal (identification number: C001" (refer to FIG. 14). When the matched "fingerprint feature amount information" does not exist in the collation target biometric information storage unit 32g, the second authenticating unit 33f determines that the user having the "identification number: 00001" is not permitted to log in the information terminal (identification number: C001).

The case where the user who enters the area and has the use authority of the information terminal 7 is selected as the collation target has been described. However, the user who actually enters an area where authentication is required and has the use authority of the information terminal 7 may be selected as the collation target. As a result, the users who are permitted to enter a place where the biometric information reading apparatus is disposed can be narrowed down as a population in the collation targets of the "1:N authentication", and authentication performance can be improved.

### Procedure of a process of the user authenticating system in the sixth embodiment

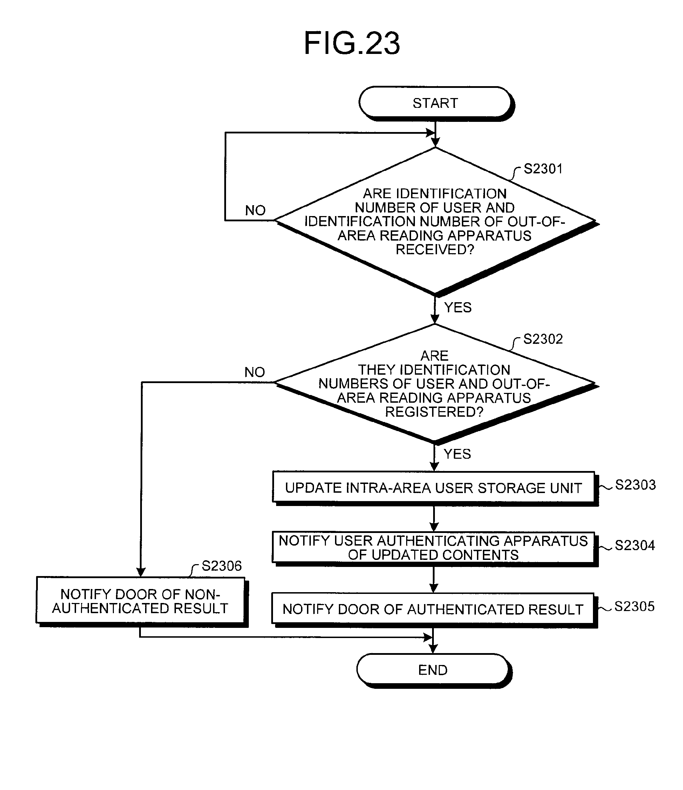

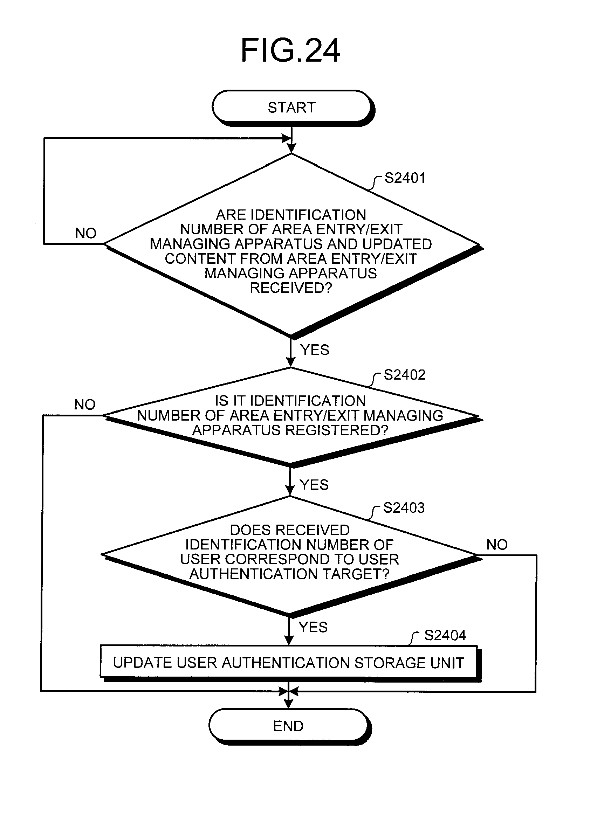

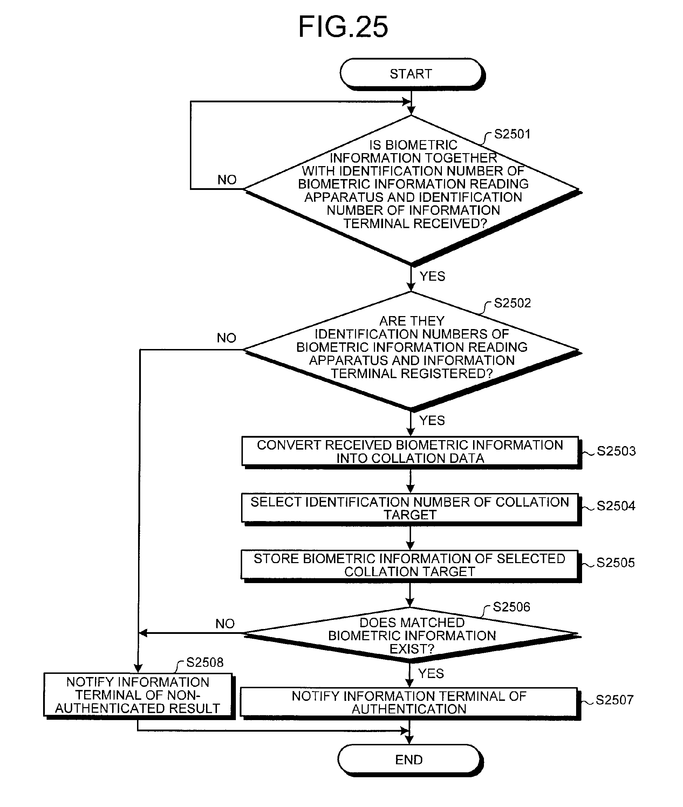

Next, the process of the user authenticating system in the sixth embodiment will be described using FIGS. 23 to 25. FIG. 23 is a diagram illustrating a process at the time of an entry in an area entry/exit managing apparatus in the sixth embodiment. FIG. 24 is a diagram illustrating a process at the time of an entry in the user authenticating apparatus in the sixth embodiment. FIG. 25 is a diagram illustrating an authenticating process of the user authenticating apparatus in the sixth embodiment.

### Procedure of the process at the time of an entry in the area entry/exit managing apparatus in the sixth embodiment

As illustrated in FIG. 23, first, if the area entry/exit managing apparatus 20 in the sixth embodiment receives the identification number of the user and the identification number of the out-of-area reading apparatus 4 from the out-of-area reading apparatus 4 (S2301: YES), the first authenticating unit 23a determines whether the identification number of the user and the identification number of the out-of-area reading apparatus 4 to be received are the combination of the identification numbers registered in the area entry/exit authority management storage unit 22a (S2302).

When it is determined that the identification number of the user and the identification number of the out-of-area reading apparatus 4 to be received are not the combination of the identification numbers registered in the area entry/exit authority management storage unit 22a (S2302: NO), the first authenticating unit 23a notifies the door 6 of the result indicating that the user is not authenticated to enter the area (S2306), and completes the process. In other words, when the combination of the "identification number of the user" and the identification number of the out-of-area reading apparatus 4 to be received is not a valid combination, the first authenticating unit 23a does not permit that the user having the "identification number: 00001" enters the area, transmits a control signal to the door 6, and maintains the locked state of the door 6.

In contrast, when it is determined that the identification number of the user and the identification number of the out-of-area reading apparatus 4 to be received are the combination of the identification numbers registered in the area entry/exit authority management storage unit 22a (S2302: YES), the first authenticating unit 23a adds the identification information of the user to the intra-area user storage unit 22b and stores the identification number, and updates the intra-area user storage unit 22b (S2303). For example, the first authenticating unit 23a adds the "identification number: 00001" to the intra-area user storage unit 22b and stores the identification number.

The database cooperation unit 23b notifies the user authenticating apparatus 30 of the added and updated content (S2304). In other words, the database cooperation unit 23b refers to the database cooperation policy storage unit 22c to notify the user authenticating apparatus 30 that the "identification number: 00001" is newly added and updated.

The first authenticating unit 23a notifies the door 6 of the result indicating that the user is authenticated to enter the area (S2305), and completes the process. In other words, when the combination of the "identification number of the user" and the identification number of the out-of-area reading apparatus 4 to be received is a valid combination, the first authenticating unit 23a permits that the user having the "identification number: 00001" enters the area, transmits a control signal to the door 6, and changes the state of the door 6 from the locked state to the unlocked state.

A procedure of a process at the time of an exit in the area entry/exit managing apparatus in the sixth embodiment is the same as that of FIG. 23. The description is given below.

First, if the area entry/exit managing apparatus 20 in the sixth embodiment receives the identification number of the user and the identification number of the intra-area reading apparatus 5 from the intra-area reading apparatus 5 (S2301: YES), the first authenticating unit 23a determines whether the identification number of the user and the identification number of the intra-area reading apparatus 5 to be received are the combination of the identification numbers registered in the area entry/exit authority management storage unit 22a (S2302).

When it is determined that the identification number of the user and the identification number of the intra-area reading apparatus 5 to be received are not the combination of the identification numbers registered in the area entry/exit authority management storage unit 22a (S2302: NO), the first authenticating unit 23a notifies the door 6 of the result indicating that the user is not authenticated to exit from the area (S2306), and completes the process.

In contrast, when it is determined that the identification number of the user and the identification number of the intra-area reading apparatus 5 to be received are the combination of the identification numbers registered in the area entry/exit authority management storage unit 22a (S2302: YES), the first authenticating unit 23a deletes the identification number of the user from the intra-area user storage unit 23b, and updates the intra-area user storage unit 22b (S2303).

The database cooperation unit 23b refers to the database cooperation policy storage unit 22c to notify the user authenticating apparatus 30 of the deleted and updated contents (S2304).

The first authenticating unit 23a notifies the door 6 of the result indicating that the user is authenticated to exit from the area (S2305), and completes the process. In other words, when the combination of the "identification number of the user" and the identification number of the intra-area reading apparatus 5 to be received is a valid combination, the first authenticating unit 23a permits that the user having the "identification number: 00001" exits from the area, transmits a control signal to the door 6, and changes the state of the door 6 from the locked state to the unlocked state.

Procedure of the process at the time of an entry in the user authenticating apparatus in the sixth embodiment
As illustrated in FIG. 24, first, if the user authenticating apparatus 30 in the sixth embodiment receives the identification number of the area entry/exit managing apparatus 20 and the added and updated content (identification information of the user) from the area entry/exit managing apparatus 20 (S2401: YES), the database cooperation unit 33a determines whether the received identification number of the area entry/exit managing apparatus 20 is included in the identification numbers of the area entry/exit managing apparatuses registered in the database cooperation policy storage unit 32a (S2402).

When the received identification number of the area entry/exit managing apparatus 20 is not included in the identification numbers of the area entry/exit managing apparatuses registered in the database cooperation policy storage unit 32a (S2402: NO), the database cooperation unit 33a completes the process.

In contrast, when the received identification number of the area entry/exit managing apparatus 20 is included in the identification numbers of the area entry/exit managing apparatuses registered in the database cooperation policy storage unit 32a (S2402: YES), the database cooperation unit 33a determines whether the added and updated content (identification number of the user) to be received is included in the user authentication targets in the area registered in the authentication target selection policy storage unit 32b (S2403).

When the database cooperation unit 33a determines whether the added and updated content (identification number of the user) to be received is not included in the user authentication targets in the area registered in the authentication target selection policy storage unit 32b (S2403: NO), the database cooperation unit 33a completes the process.

In contrast, when the database cooperation unit 33a determines whether the added and updated content (identification number of the user) to be received is included in the user authentication targets in the area registered in the authentication target selection policy storage unit 32b (S2403: YES), the database cooperation unit 33a adds the added and updated content to be received to the user authentication target storage unit 32c and updates the user authentication target storage unit (S2404), and completes the process.

A procedure of a process at the time of an exit in the user authenticating apparatus in the sixth embodiment is the same as that of FIG. 24. The description is given below.

As illustrated in FIG. 24, first, if the user authenticating apparatus 30 in the sixth embodiment receives the identification number of the area entry/exit managing apparatus 20 and the deleted and updated content (identification information of the user) from the area entry/exit managing apparatus 20 (S2401: YES), the database cooperation unit 33a determines whether the received identification number of the area entry/exit managing apparatus 20 is included in the identification numbers of the area entry/exit managing apparatuses registered in the database cooperation policy storage unit 32a (S2402).

When the received identification number of the area entry/exit managing apparatus 20 is not included in the identification numbers of the area entry/exit managing apparatuses registered in the database cooperation policy storage unit 32a (S2402: NO), the database cooperation unit 33a completes the process.

In contrast, when the received identification number of the area entry/exit managing apparatus 20 is included in the identification numbers of the area entry/exit managing apparatuses registered in the database cooperation policy storage unit 32a (S2402: YES), the database cooperation unit 33a determines whether the deleted and updated content (identification number of the user) to be received is included in the user authentication targets in the area registered in the authentication target selection policy storage unit 32b (S2403).

When the database cooperation unit 33a determines whether the deleted and updated content (identification number of the user) to be received is not included in the user authentication targets in the area registered in the authentication target selection policy storage unit 32b (S2403: NO), the database cooperation unit 33a completes the process.

In contrast, when the database cooperation unit 33a determines whether the deleted and updated content (identification number of the user) to be received is included in the user authentication targets in the area registered in the authentication target selection policy storage unit 32b (S2403: YES), the database cooperation unit 33a deletes the deleted and updated content to be received from the user authentication target storage unit 32c and updates the user authentication target storage unit (S1204), and completes the process.

### Procedure of the authenticating process of the user authenticating apparatus in the sixth embodiment

As illustrated in FIG. 25, first, if the user authenticating apparatus 30 in the sixth embodiment receives the "fingerprint image", which corresponds to the biometric information transmitted by the biometric information reading apparatus 8, together with the identification number of the biometric information reading apparatus 8 and the identification number of the information terminal 7 connected to the biometric information reading apparatus 8 (S2501: YES), the authentication request processing unit 33b determines whether the combination of the identification number of the biometric information reading apparatus 8 and the identification number of the information terminal 7 to be received is registered in the terminal sensor storage unit 32d (S2502).

When the authentication request processing unit 33b determines that the combination of the identification number of the biometric information reading apparatus 8 and the identification number of the information terminal 7 to be received is not registered in the terminal sensor storage unit 32d (S2502: NO), the authentication request processing unit 33b notifies the information terminal 7 of the result indicating that the login is not authenticated (S2508), and completes the process.

In contrast, when the authentication request processing unit 33b determines that the combination of the identification number of the biometric information reading apparatus 8 and the identification number of the information terminal 7 to be received is registered in the terminal sensor storage unit 32d (S2502: YES), the collation data creating unit 33c creates the "fingerprint feature amount information" from the received "fingerprint image", according to the instruction of the authentication request processing unit 33b (S2503).

The collation target selecting unit 33d selects the identification number of the collation target of the "1:N authentication", according to the instruction of the authentication request processing unit 33b (S2504). In other words, the collation target selecting unit 33d refers to the terminal apparatus use authority storage unit 32e and the user authentication target storage unit 32c to select the identification number of the user who is the "user having the use authority in the information terminal (identification number: C001) requiring the login" and the "user registered in the user authentication target storage unit 32c").

Next, the collation target biometric information selecting unit 33e acquires the "fingerprint feature amount information" as the biometric information corresponding to the identification number of the user selected by the collation target selecting unit 33d, from the biometric information storage unit 9, and stores the acquired "fingerprint feature amount information" in the collation target biometric information storage unit 32g (S2505).

The second authenticating unit 33f determines whether the "fingerprint feature amount information" matched with the "fingerprint feature amount information" created by the collation data creating unit 33c exists in the collation target biometric information storage unit 32g (S2506).

When the "fingerprint feature amount information" matched with the "fingerprint feature amount information" created by the collation data creating unit 33c does not exist in the collation target biometric information storage unit 32g (S2506: NO), the second authenticating unit 33f notifies the information terminal 7 of the result indicating that the login is not authenticated (S2508), and completes the process.

In contrast, when the "fingerprint feature amount information" matched with the "fingerprint feature amount information" created by the collation data creating unit 33c exists in the collation target biometric information storage unit 32g (S2506: YES), the second authenticating unit 33f notifies the information terminal 7 of the result indicating that the login is authenticated (S2507), and completes the process.

### Effect of the sixth embodiment

As described above, according to the sixth embodiment, the user authenticating apparatus associates the identification information to identify each of the plural users who are previously permitted to enter or exit from the area and the "fingerprint feature amount information" corresponding to the biometric information of each user and stores the association result. The user authenticating apparatus acquires the identification information from the user who requires entering the area, authenticates the user who enters the area using the acquired identification information and the stored identification information, as the first authentication, and stores the identification information of the user whose first authentication is succeeded as the success information. The user authenticating apparatus acquires the "fingerprint image" from the user who requests to log in the information terminal disposed in the area, and authenticates the user who logs in the information terminal using the "fingerprint feature amount information" extracted from the acquired "fingerprint image" and the "fingerprint feature amount information" corresponding to the identification information of the user stored as the success information among the stored "fingerprint feature amount information", as the second authentication. Therefore, the user authenticating apparatus can narrow down only the users who are permitted to enter the area as the collation targets of the "1: N authentication", and can improve authentication performance.

According to the sixth embodiment, when the user exits from the area, the user authenticating apparatus further acquires the identification information of the user, and further deletes the identification information acquired when the user exits from the area, from the success information. Therefore, the user authenticating apparatus can exclude the users who rarely require authentication from the collation targets of the "1: N authentication", and can improve authentication performance.

According to the sixth embodiment, the user authenticating apparatus acquires the identification information of the user who enters the area, acquires the identification information of the user who exits from the area, and stores the identification information of the user who enters the area as the success information, until the user exits from the area. Therefore, the user authenticating apparatus can narrow down only the users who are likely to require authentication as the collation targets of the "1:N authentication", and can improve authentication performance.

According to the sixth embodiment, the user authenticating apparatus adds the acquired identification information of the user who enters the area as the success information and stores the success information, and deletes the acquired identification information of the user who exits from the area, from the success information. Therefore, the user authenticating apparatus can quickly exclude the users who do not require authentication from the collation targets of the "1:N authentication", and can improve authentication performance.

Meanwhile, in the sixth embodiment, the case where the area entry/exit managing apparatus 20 manages the entry/exit with respect to the physical space and the user authenticating apparatus 30 manages the entry/exit with respect to the logical space has been described. However, the present invention is not limited thereto, and the area entry/exit managing apparatus 20 and the user authenticating apparatus 30 may manage the entry/exit with respect to the physical space. For example, the area entry/exit managing apparatus 20 may manage that the user enters or exits from a building, and the user authenticating apparatus 30 may refer to the success information received from the area entry/exit managing apparatus 20 to manage that the user enters or exits from a room in the building through the "1:N authentication".

The area entry/exit managing apparatus 20 may manage the entry/exit with respect to the logical space, and the user authenticating apparatus 30 may manage the entry/exit with respect to the physical space. For example, the area entry/exit managing apparatus 20 that is disposed in a check-in counter in an airport performs a check-in management of the user, and manages that the user enters a logical group of "check-in completion". The user authenticating apparatus 30 that is disposed in a boarding gate of an airplane refers to the success information received from the area entry/exit managing apparatus 20 to manage that the user boards a plane through the "1:N authentication".

The area entry/exit managing apparatus 20 may manage the entry/exit with respect to the logical space, and the user authenticating apparatus 30 may manage the entry/exit with respect to the logical space. For example, the area entry/exit managing apparatus 20 may perform a reservation management of a phone discussion and manage that the user enters a logical group of "phone discussion completion". The user authenticating apparatus 30 may refer to the success information received from the area entry/exit managing apparatus 20 to manage that the user enters the logical group of "anticipating in the phone discussion in the reservation time", through the "1:N authentication".

### Seventh Embodiment

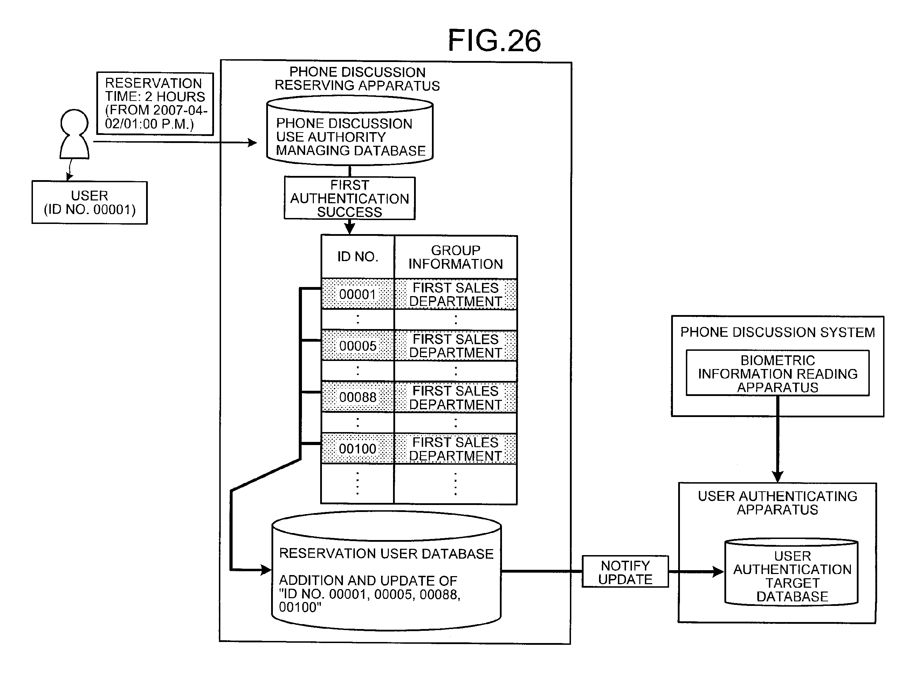

In the above-described sixth embodiment, the case where the biometric information of the user whose first authentication is succeeded is added to the collation targets of the second authentication has been described. However, in the seventh embodiment, the case where the biometric information of the user whose first authentication is succeeded and the biometric information of the other users of the group that the user belongs are added to the collation targets of the second authentication will be described using FIG. 26. FIG. 26 is a diagram illustrating a user authenticating system in the seventh embodiment.

A phone discussion reserving apparatus that constitutes the user authenticating system in the seventh embodiment associates "group information" to identify a group that each user belongs with "identification information" of each user and stores the association result. Specifically, as illustrated in FIG. 26, the phone discussion reserving apparatus that constitutes the user authenticating system in the seventh embodiment associates the "group information" with the "identification number" and stores the association result. For example, the user having the "identification number: 00001", the user having the "identification number: 00005", the user having the "identification number: 00088", and the "user having the "identification number: 00100" are registered as the users who are previously permitted to anticipate in the phone discussion. With respect to these users, a "first sales department" that is the same group information is provided.

The phone discussion reserving apparatus that constitutes the user authenticating system in the seventh embodiment stores the identification information of the user whose first authentication is succeeded and the identification information of the other users corresponding to the group information of the user as the success information. In other words, as illustrated in FIG. 26, when the phone discussion reserving apparatus that constitutes the user authenticating system in the seventh embodiment acquires the "identification number: 00001" from the IC card provided by the user having the "identification number: 00001", receives the reservation of the phone discussion at "reservation time: 2007-04-02/01:00 to 03:00 p.m.", and authenticates the user, the phone discussion reserving apparatus adds the "identification number: 00001" determined as "reservation reception completion", and "identification information: 00005", "identification information: 00088", and "identification information: 00100" corresponding to the "group information: first sales department" provided to the "identification number: 00001" to a reservation user database, and updates the reservation user database.

As illustrated in FIG. 26, if the user authenticating apparatus that constitutes the user authenticating system in the seventh embodiment receives the added and updated "identification number", the user authenticating apparatus adds the "identification number" to the user authentication target database and updates the user authentication target database.

In this way, even when the user authenticating system in the seventh embodiment receives the biometric information of the user having the "identification information: 00005" at "reservation time: 2007-04-02/01:00 p.m." from the biometric information reading apparatus connected to the phone discussion system, the user authenticating system can quickly read the biometric information corresponding to the "identification number: 0-0005" as the collation target. Therefore, authentication performance can be improved.

### Eighth Embodiment

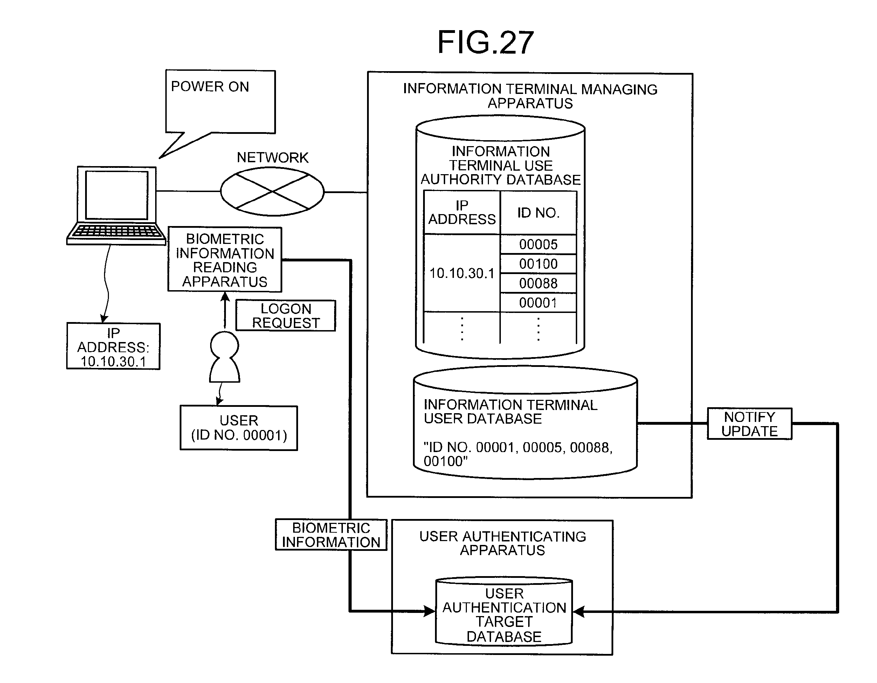

In the above-described sixth embodiment, the case where the "entry/exit of the user" is managed by the first authentication has been described. However, in the eighth embodiment, the case where an "entry/exit of a product" is managed by first authentication will be described using FIG. 27. FIG. 27 is a diagram illustrating a user authenticating system in the eighth embodiment.

An information terminal managing apparatus that constitutes the user authenticating system in the eighth embodiment associates information of the information terminal that the user desires to start to use with the identification information of the user and stores the association result. For example, as illustrated in FIG. 27, the information terminal managing apparatus that constitutes the user authenticating system in the eighth embodiment stores information indicating that identification numbers of the users who are permitted to use an information terminal having an "IP address: 10.10.30.1" are the "identification number: 00001", the "identification number: 00005", the "identification number: 00088", and the "identification number: 00100", in an information terminal use authority database.

The information terminal managing apparatus that constitutes the user authenticating system in the eighth embodiment acquires the identification information of the user from the information of the information terminal that the user desires to start to use. For example, when the user having the "identification information: 00001" makes a power supply of an information terminal having an "IP address: 10.10.30.1" become "ON", the information terminal managing apparatus receives a message indicating that the power supply of the information terminal becomes "ON" through a network. After receiving the message indicating that the power supply of the information terminal having the "IP address: 10.10.30.1" becomes "ON", the information terminal managing apparatus that constitutes the user authenticating system in the eighth embodiment refers to the information terminal use authority database, adds the "identification number: 00001", the "identification number: 00005", the "identification number: 00088", and the "identification number: 00100" to the information terminal user database, and updates and stores the information terminal user database, as illustrated in FIG. 27.

As illustrated in FIG. 27, if the user authenticating apparatus that constitutes the user authenticating system in the eight embodiment receives the added and updated "identification number", the user authenticating apparatus adds the "identification number" to the user authentication target database and updates the user authentication target database.

In this way, even when the user authenticating system in the eighth embodiment receives the biometric information from the user having the "identification number: 00001" from the biometric information reading apparatus connected to the information terminal in order to log in the information terminal having the "IP address: 10.10.30.1", the user authenticating system can quickly read the biometric information corresponding to the "biometric information: 00001" as the collation target. Therefore, authentication performance can be improved. Since the first authenticating process can be quickly executed using the IP address of the information terminal that can specify the user, instead of the user, authentication performance can be improved.

### Ninth Embodiment

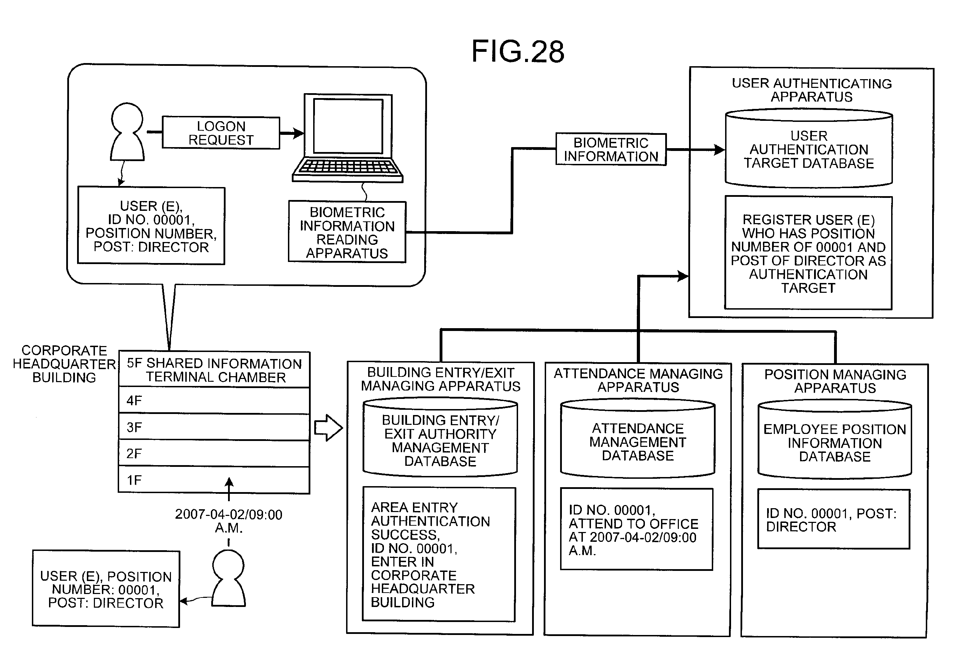

In the above-described sixth to eighth embodiments, the case where the user authentication process is executed by two steps has been described. However, in the ninth embodiment, the case where the user authentication process is executed in each step will be described using FIG. 28. FIG. 28 is a diagram illustrating a user authenticating system in the ninth embodiment.

The user authenticating system in the ninth embodiment includes a building entry/exit managing apparatus, an attendance managing apparatus, a position managing apparatus, and a user authenticating apparatus. The building entry/exit managing apparatus manages the entry/exit of the user from the 1F of a corporate headquarter building using a building entry/exit authority management database. The building entry/exit authority management database previously stores the identification numbers of the users who are permitted to enable the entry/exit from the 1F of the corporate headquarter building. When the identification number matched with the identification number received from the user is stored by the building entry/exit authority management database, the building entry/exit managing apparatus permits the entry/exit of the user from the 1F of the corporate headquarter building. For example, the building entry/exit managing apparatus in the ninth embodiment refers to the building entry/exit authority management database to permit the entry of the user (E) having the "identification number: 00001" from the 1F of the corporate headquarter building at the point of time "2007-04-02/09:00 a.m." as illustrated in FIG. 28.

The attendance managing apparatus manages an attendance of each user in cooperation with the building entry/exit managing apparatus and stores a record thereof in an attendance management database. For example, the attendance managing apparatus stores a record indicating that the user (E) having the "identification number: 00001" attends the office at the point of time "2007-04-02/09:00 a.m." as illustrated in FIG. 28.

The position managing apparatus stores a post of each user in an employee position information database. For example, the position managing apparatus stores that a post of the user "E" having the "identification number: 00001" is a "director".

The user authenticating apparatus that constitutes the user authenticating system in the ninth embodiment integrates information of the building entry/exit managing apparatus, the attendance managing apparatus, and the position managing apparatus. The user authenticating apparatus immediately registers the "identification number: 00001" of the user (E) who attends the office at the point of time "2007-04-02/09:00 a.m." as the authentication target in the user authentication target database, from the fact of the user having a high position as the "director" when referring to the "post."

For example, even when the user (E) of the "post: director" requests to log in an information terminal disposed in a shared information terminal chamber at the 5F of the corporate headquarter building and reads his/her biometric information by the biometric information reading apparatus connected to the information terminal, the user authenticating apparatus that constitutes the user authenticating system in the ninth embodiment can refer to the user authentication target database to quickly authenticate the biometric information of the user (E) received from the biometric information reading apparatus, and can improve authentication performance.

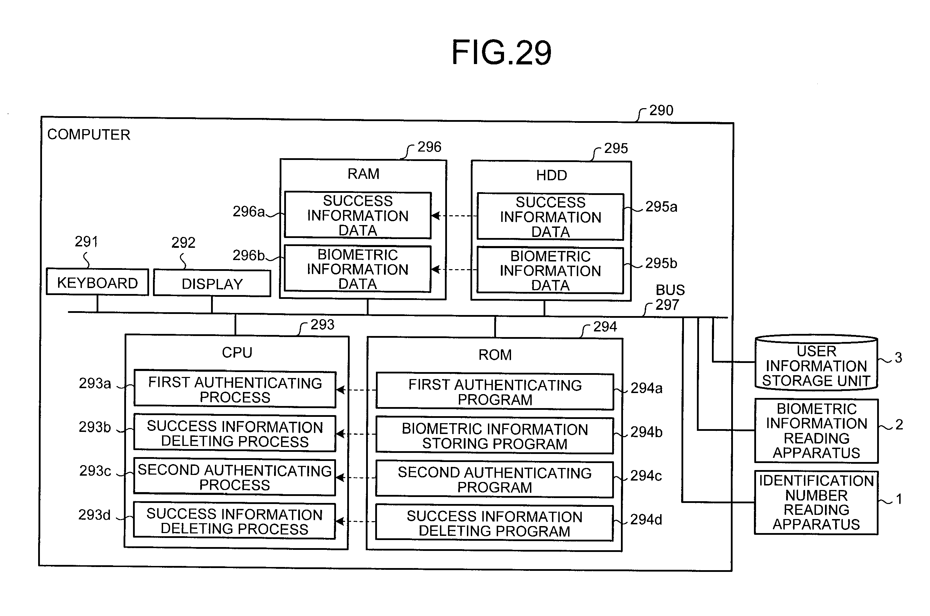

In the first to ninth embodiments, the case where the various processes are realized by the hardware logic has been described. However, the present invention is not limited thereto, and a prepared program may be executed by a computer. Hereinafter, an example of a computer that executes a user authenticating program having the same function as the user authenticating apparatus 10 in the first embodiment will be described using FIG. 29. FIG. 29 is a computer that executes a user authenticating program in the first embodiment.

As illustrated in FIG. 29, a computer 290 that functions as an information processing apparatus is configured by connecting includes a keyboard 291, a display 292, a CPU 293, a ROM 294, an HDD 295, and a RAM 296 through a bus 297, and is connected to the identification number reading apparatus 1, the biometric information reading apparatus 2, and the user information storage unit 3.

The ROM 294 stores the user authenticating program having the same function as the user authenticating apparatus 10 in the first embodiment, that is, a first authenticating program 294a, a biometric information storing program 294b, a second authenticating program 294c, and a success information deleting program 294d in advance. These programs 294a to 294d may be appropriately integrated or separated, like the various elements constituting the user authenticating apparatus 10 illustrated in FIG. 2.

The CPU 293 reads the programs 294a to 294d from the ROM 294 and executes the programs. As a result, as illustrated in FIG. 29, the individual programs 294a to 294d function as a first authenticating process 293a, a biometric information storing process 293b, a second authenticating process 293c, and a success information deleting process 293d. The processes 293a to 293d correspond to the first authenticating unit 13a, the biometric information storage unit 13b, the second authenticating unit 13c, and the success information deleting unit 13d, which are illustrated in FIG. 2.

As illustrated in FIG. 29, the HDD 295 is provided with success information data 295a and biometric information data 295b. The success information data 295a corresponds to the success information storage unit 12a using FIG. 2, and the biometric information data 295b corresponds to the biometric information storage unit 12b. The CPU 293 registers success information data 296a with respect to the success information data 295a, registers a biometric information data 296b with respect to the biometric information data 295b, reads the success information data 296a and the biometric information data 296b, stores the success information data 296a and the biometric information data 296b in the RAM 296, and executes a user authenticating process on the basis of the success information data 296a and the biometric information data 296b stored in the RAM 296.

The individual programs 294a to 294d do not need to be stored in the ROM 294 from the beginning. For example, the programs may be stored in "portable physical media", such as a flexible disk (FD), a CD-ROM, an MO disk, a DVD disk, a magneto-optical disk, and an IC card, which are inserted into the computer 290, "fixed physical medium", such as the HDD, which are provided inside and outside the computer 290, or "other computers (or servers) connected to the computer 290 through a public circuit, the Internet, a LAN, and a WAN, and the computer 290 may read each program therefrom and execute each program.

All or part of the processes that are described as being automatically executed among the processes described in the above-described embodiments can be manually executed (for example, the success information is not automatically updated and the updated success information is received from a manager of the user authenticating apparatus 10), or all or part of the processes that are described as being manually executed can be automatically executed by a known method. For example, the process procedures, the specific names, and the information including the variety of data or parameters (for example, registration time of the success information) that are illustrated in the above sentences or drawings may be arbitrarily updated, except for the case where special mentions are not given.

The components of the individual apparatus that are illustrated in the drawings are functional and conceptual, and do not need to have the physical configuration as illustrated in the drawings. In other words, the specific forms (for example, form of FIG. 2) of integration and separation of the processors and the storage units are not limited to the forms illustrated in the drawings. For example, like the case where the first authenticating unit 13a and the biometric information storage unit 13b are integrated with each other, all or part of the processors and the storage units may be functionally or physically separated or integrated in an arbitrary unit. All or part of the processing functions that are performed by the individual apparatuses may be realized by the CPU or the program analyzed and executed by the CPU, or realized as hardware by wired logic.

### INDUSTRIAL APPLICABILITY

As such, a user authenticating apparatus, a user authenticating method, and a user authenticating program in accordance with the present invention can be effectively used when the user is authenticated, and can improve authentication performance in particular.

## Claims

1. A user authenticating apparatus for authenticating a user, comprising:
a user information storage unit that stores user information where identification information for uniquely identifying each of a plurality of users and biometric information of the each of the users are associated with each other;
an identification information acquiring unit that acquires identification information of the user, when the user starts to use a predetermined target;
a first authenticating unit that authenticates the user using the identification information acquired by the identification information acquiring unit and the user information stored in the user information storage unit;
a success information storage unit that stores, as success information, the identification information of the user who is successfully authenticated by the first authenticating unit;
a biometric information acquiring unit that acquires the biometric information of the user; and
a second authenticating unit that authenticates the user using the biometric information acquired by the biometric information acquiring unit and the biometric information corresponding to the identification information of the users stored as the success information in the success information storage unit among the biometric information stored in the user information storage unit.

2. The user authenticating apparatus according to claim 1, further comprising a success information deleting unit that determines whether a predetermined registration time has passed after predetermined success information is stored in the success information storage unit, and deletes the predetermined success information from the success information storage unit, when the registration time has passed.

3. The user authenticating apparatus according to claim 2, wherein the success information deleting unit determines whether a registration time set for each user has passed.

4. The user authenticating apparatus according to claim 2, wherein, when the number of success information stored in the success information storage unit becomes a predetermined value or more, the success information deleting unit uses a registration time shorter than a registration time used for a determination when the number of success information is smaller than the predetermined value to determine whether the registration time has passed.

5. The user authenticating apparatus according to claim 2, further comprising a use frequency storage unit that stores a use frequency of each user,
wherein, when the number of success information stored in the success information storage unit becomes a predetermined value or more, the success information deleting unit further deletes success information of the user whose use frequency is smaller than a predetermined value from the success information storage unit, based on the use frequency of each user stored in the use frequency storage unit.

6. The user authenticating apparatus according to claim 1,
wherein the user information storage unit associates group identification information for uniquely identifying a group that each user belongs with the identification information of each user and stores the user information, and
the success information storage unit stores the identification information of the user successfully authenticated by the first authenticating unit and identification information of the other users corresponding to the group identification information of the user as the success information.

7. The user authenticating apparatus according to claim 1, wherein
the user information storage unit associates a product or information used by the user with the identification information of the user and stores the user information, and
the identification information acquiring unit acquires the identification information of the user from the product or information used by the user.

8. The user authenticating apparatus according to claim 2, wherein
when the user completes to use the predetermined target, the identification information acquiring unit further acquires the identification information of the user, and
the success information deleting unit further deletes the identification information, which is acquired when the use is completed by the identification information acquiring unit, from the success information storage unit.

9. The user authenticating apparatus according to claim 1, wherein
the identification information acquiring unit acquires identification information of the user who returns a predetermined product or information, and
the biometric information acquiring unit acquires biometric information of the user who desires to lend a predetermined product or information.

10. The user authenticating apparatus according to claim 1, further comprising a biometric information storage unit that acquires biometric information corresponding to the identification information of the user stored as the success information in the success information storage unit from the user information storage unit, and stores the biometric information,
wherein the second authenticating unit authenticates the user using the biometric information stored in the biometric information storage unit.

11. The user authenticating apparatus according to claim 2, further comprising a lending frequency storage unit that storages a lending frequency by which the user who has returned a predetermined product or information lends the predetermined product or information at the same date,
wherein, when the number of success information stored in the success information storage unit becomes a predetermined value or more, the success information deleting unit further deletes success information of the user whose lending frequency is smaller than a predetermined value from the success information storage unit, based on a lending frequency of each user stored in the lending frequency storage unit.

12. The user authenticating apparatus according to claim 1,
wherein the identification information acquiring unit acquires the identification information of the user who enters a predetermined area, and acquires the identification information of the user who exits from the predetermined area, and
the success information storage unit stores the identification information of the user who enters the predetermined area as the success information, until the user exits from the predetermined area.

13. The user authenticating apparatus according to claim 12, further comprising:
a success information adding and deleting unit that adds the identification information acquired as the entry by the identification information acquiring unit to the success information storage unit and stores the information, and deletes the identification information acquired as the exit by the identification information acquiring unit from the success information storage unit.

14. The user authenticating apparatus according to claim 13, wherein the success information adding and deleting unit obtains a plurality of pieces of identification information acquired by the identification information acquiring unit, and adds each piece of identification information to or deletes each piece of identification information from the success information storage unit, according to whether each identification information is the entry or the exit.

15. The user authenticating apparatus according to claim 13, wherein the success information adding and deleting unit obtains a plurality of pieces of identification information acquired by the identification information acquiring unit for every predetermined time, and adds each piece of identification information to or deletes each piece of identification information from the success information storage unit, according to whether each piece of identification information is the entry or the exit.

16. The user authenticating apparatus according to claim 12, wherein the success information storage unit always stores the identification information of the predetermined user as success information, without depending on whether the predetermined user enters the predetermined area or exits from the predetermined area.

17. The user authenticating apparatus according to claim 12, wherein
the success information storage unit always stores the identification information of the predetermined user as non-success information, without depending on whether the predetermined user enters the predetermined area or exits from the predetermined area, and
the second authenticating unit authenticates the user without using biometric information corresponding to the identification information of the user stored as the non-success information in the success information storage unit.

18. The user authenticating apparatus according to claim 12, wherein
the second authenticating unit authenticates the user using the identification information of the user who enters an acquisition area of biometric information and whose information is stored as the success information in the success information storage unit, according to whether the biometric information is acquired by the biometric information acquiring unit.

19. A user authenticating method for authenticating a user, comprising:
a user information storing step of storing user information where identification information for uniquely identifying each of a plurality of users and biometric information of the each of the users are associated with each other;
an identification information acquiring step of acquiring identification information of the user, when the user starts to use a predetermined target;
a first authenticating step of authenticating the user using the identification information acquired at the identification information acquiring step and the user information stored at the user information storing step;
a success information storing step of storing, as success information, the identification information of the user who is successfully authenticated at the first authenticating step;
a biometric information acquiring step of acquiring the biometric information of the user; and
a second authenticating step of authenticating the user using the biometric information acquired at the biometric information acquiring step and the biometric information corresponding to the identification information of the users stored as the success information at the success information storing step among the biometric information stored at the user information storing step.

20. A user authenticating program that causes a computer to perform a user authenticating method for authenticating a user, the user authenticating program causing the computer to perform:
a user information storing step of storing user information where identification information for uniquely identifying each of a plurality of users and biometric information of the each of the users are associated with each other;
an identification information acquiring step of acquiring identification information of the user, when the user starts to use a predetermined target;
a first authenticating step of authenticating the user using the identification information acquired at the identification information acquiring step and the user information stored at the user information storing step;
a success information storing step of storing, as success information, the identification information of the user who is successfully authenticated at the first authenticating step;
a biometric information acquiring step of acquiring the biometric information of the user; and
a second authenticating step of authenticating the user using the biometric information acquired at the biometric information acquiring step and the biometric information corresponding to the identification information of the users stored as the success information at the success information storing step among the biometric information stored at the user information storing step.
